# EUROPEAN PATENT SPECIFICATION

(11) **EP 0 895 204 B1**
(45) Date of publication and mention of the grant of the patent: **10.12.2003**
(21) Application number: 98114233.4
(22) Date of filing: 29.07.1998
(51) Int. Cl.: G07F 7/10

(54) **IC card issuing system and IC card issuing method**
Chipkartenausgabesystem und -verfahren
Systéme et méthode pour l'émission de cartes à puce

(30) Priority: 01.08.1997 JP 20785997; 01.08.1997 JP 20786097; 01.08.1997 JP 20786197
(43) Date of publication of application: 03.02.1999
(73) Proprietor: KABUSHIKI KAISHA TOSHIBA, Kawasaki-shi, Kanagawa-ken 210-8572 (JP)
(72) Inventor: Sekiya, Satoshi, Shibaura 1-chome, Minato-ku Tokyo 105 (JP)
(74) Representative: Blumbach, Kramer & Partner GbR

(56) References cited:
- EP-A- 0 354 793
- EP-A- 0 430 257
- EP-A- 0 778 553
- EP-A- 0 784 290
- WO-A-92/17856
- WO-A-97/39424
- US-A- 5 592 400

## Description

This invention relates to an IC card issuing system for issuing an IC card that houses an IC (integrated circuit) chip having a nonvolatile data memory and a CPU (central processing unit) for controlling the data memory, and to an IC card issuing method.

As every one knows, IC cards have been widely used as portable information recording mediums in various fields of industry. The IC card is a synthetic resin card that houses an IC card having a nonvolatile data memory and a CPU for controlling the data memory.

IC cards of this type are generally issued using issuing apparatuses installed in card issuing companies. The issuing apparatus is composed of a computer and an issuing machine. The computer creates IC card instruction data, magnetic encode data, and print data, which are necessary to cause the IC card to function and transfers the data to the issuing machine.

Then, the issuing machine not only inputs the IC card instruction data to the IC card (data memory or the like) to magnetically record the magnetic encode data on the surface of the IC card but also prints on the surface of the IC card on the basis of the print data. This completes the issuing process.

The IC card instruction data is composed of instruction codes and subordinate data added to the instruction codes, if necessary. The instruction code is used to perform various types of control including setting conditions in the CPU in the IC card and writing subordinate data into the data memory in the IC card.

To issue IC cards, it is necessary to input more than one IC card instruction data item into a single IC card. To do this, the IC card instruction data items are transferred one by one from the computer to the issuing machine and entered into the IC card in sequence.

In the IC card, each time one IC instruction data item has been inputted, the internal CPU checks whether the item has been entered properly and returns, for example, a status code to the issuing machine as response data indicating the result of the check. Then, the issuing machine outputs the status code to the computer.

The computer has stored the status code which the IC card is to return when the data has been entered properly. The computer collates the stored status code with the status code returned from the IC card, thereby determining whether or not the data has been inputted properly.

Only when determining that the data has been inputted properly, the computer transfers to the issuing machine an IC card instruction data item to be inputted to the IC card. Thereafter, similar operations are repeated. When determining that the input is abnormal, the computer ends the issuing process.

With the conventional issuing machine, however, to issue a single IC card, the IC card instruction data and response data are transferred between the computer and the issuing machine many times, which causes the problem of requiring a long time for the IC card issuing process.

The status code outputted from the IC card as response data has been registered beforehand in the IC card. Because of this, for example, when an IC card complying with code specifications different from ordinary ones is set as an object to be issued, the status code outputted from the IC card disagrees with the status code stored in the computer, even when the IC card instruction data has been entered into the IC card properly. As a result, the issuing process is terminated unfavorably.

Furthermore, in the conventional issuing machine, the time required to issue a single IC card is the sum of the time required to input the IC card instruction data, the time required to magnetically record the magnetic encode data, and the time required to print on the basis of the print data.

Specifically, once the number of IC cards to be issued has been determined, the total time required to issue all the IC cards is determined. Therefore, for example, when the operator is too busy to deal with the issuing process, the issuing process may not be performed at all, causing great inconvenience.

Furthermore, with the conventional issuing apparatus, to prevent an unauthorized person from issuing cards, the operator is required to enter a code number at the time of start-up or before starting a processing program. If the code number is not entered properly, the card issuing process will be inhibited.

With the means for assuring security by requiring the operator to enter a code number, however, if an unauthorized person has acquired the code number by dishonest means, there is a possibility that an IC card will be issued illegally because the security measures will not work effectively.

For instance, an unauthorized person can connect his own computer to the issuing machine and issue an IC card by creating the IC card instruction data, magnetic encode data, and print data illegally.

WO 97/39424 which is prior art under Art. 54 (3) EPC discloses a smart card personalization system maintaining a data base containing card issuer data format templates, card applications, card operating system commands, and personalization _{.} equipment specifications. Further, the system comprises a centralized interface of inputs and outputs to a card issuing process which dynamically adjusts to changes in the issuing process to easily permit a card issuer to change the formats, card applications, card operating systems and/or personalization equipment in a card issuing process.

US 5,592,400 discloses a card issue system including a data terminal, a card issue apparatus, a common memory, an interface and a data bus. The card issue apparatus forms a card issue process on the basis of the card issue information from the data terminal.

EP 0 784 290 discloses an apparatus for issuing integrated circuit cards. The apparatus includes an integrated circuit card writer arranged to issue each of said integrated circuit cards with information stored therein. Further, the apparatus includes a magnetic stripe card reader which is arranged to read information from a magnetic stripe card inserted therein and to transmit said information to said writer to be written into a blank integrated circuit card stored in the writer.

An object of the present invention is to provide an IC card issuing system and IC card issuing method which are capable of shortening the time required for the issuing process.

Another object of the present invention is to provide an IC card issuing system and IC card issuing method which are capable of not only shortening the time required for the issuing process but also performing the valid issuing process without errors even when an IC card whose code specifications differ from ordinary ones is set as an object to be issued.

Still another object of the present invention is to provide an IC card issuing system and IC card issuing method which are capable of not only performing all of the issuing process collectively but also performing part of the issuing process first and the remainder later to enable a flexible issuing process for the operator's convenience.

Still another object of the present invention is to provide an IC card issuing system and IC card issuing method which are capable of not only performing all of the issuing process collectively but also performing part of the issuing process first and the remainder later to enable a flexible issuing process for the operator's convenience and further of always performing the valid issuing process without errors.

Still another object of the present invention is to provide an IC card issuing system and method of controlling the apparatus which excel in security and reliability and are capable of preventing an unauthorized person from issuing cards illegally.

Still another object of the present invention is to provide an IC card issuing system and method of controlling the apparatus which are capable of not only improving the security and reliability by preventing an unauthorized person from issuing cards illegally but also shortening the time required for the issuing process.

Still another object of the present invention is to provide an IC card issuing system and method of controlling the apparatus which are capable of improving the security and reliability by preventing an unauthorized person from issuing cards illegally but also shortening the time required for the issuing process and always performing the valid issuing process.

In the IC card issuing system and IC card issuing method according to the present invention, the control section creates data items necessary to cause an IC card to function and sends the data items collectively to the issuing section. The issuing section holds the data items sent collectively from the control section and issues an IC card on the basis of the held data items. This shortens the time required to issue an IC card.

The control section creates response data the IC card is to return when data is inputted to the IC card and sends the data to the issuing section. Each time data is inputted to the IC card, the issuing section collates the response data returned from the IC card with the response data from the control section. This shortens the time required for the issuing process. In addition, even when an IC card complying with code specifications different from usual ones is set as an object to be issued, the valid issuing process is performed without errors.

Furthermore, in the IC card issuing system and IC card issuing method according to the present invention, the control section selectively creates the externally specified ones of the various types of data items necessary to cause an IC card to function and sends the created data items to the issuing section. On the basis of the selectively created data items, the issuing section issues an IC card. This makes it possible to carry out all of the issuing process collectively. In addition, only part of the issuing process may be performed first and the remainder be carried out later. This enables a flexible issuing process, taking into account the operator's convenience.

The control section creates response data the IC card is to return when data is inputted to the IC card and sends the data to the issuing section. Each time data is inputted to the IC card, the issuing section collates the response data returned from the IC card with the response data from the control section. This makes it possible to perform all of the issuing process collectively. In addition, only part of the issuing process may be carried out first and the remainder be performed later. This not only enables a flexible issuing process, taking into account the operator's convenience, but also always assures the valid issuing process without errors.

Furthermore, in the IC card issuing system and the method of controlling the apparatus, the control section creates data items necessary to cause an IC card to function and sends the data items to the issuing section. The issuing section judges whether or not the medium the operator has at the start-up of the IC card issuing apparatus is valid and, when the medium has been judged to be valid, permits the process of issuing an IC card on the basis of the data items created at the control section. This prevents an unauthorized person from issuing IC cards illegally, which assures high security and reliability.

The control section sends data items collectively to the issuing section. The issuing section holds the data items sent collectively from the control section and, on the basis of the held data items, executes the IC card issuing process. This not only prevents an unauthorized person from issuing IC cards illegally, improving security and reliability, but also shortening the time required for the issuing process.

Moreover, the control section creates response data the IC card is to return when data is inputted to the IC card and sends the created data to the issuing section. Each time data is inputted to the IC card, the issuing section collates the response data returned from the IC card with the response data from the control section. This not only prevents an unauthorized person from issuing IC cards illegally, improving security and reliability, but also shortening the time required for the issuing process and always assuring the valid issuing process.

This summary of the invention does not necessarily describe all necessary features so that the invention may also be a sub-combination of these described features.

This invention can be more fully understood from the following detailed description when taken in conjunction with the accompanying drawings, in which:
FIG. 1 is a block diagram to help explain a first embodiment of the present invention;
FIG. 2 is a flowchart to help explain the operation of the host computer in the first embodiment;
FIG. 3 shows an issue guide screen appearing on the display section of the host computer in the first embodiment;
FIG. 4 shows the structure of IC card instruction data in the first embodiment;
FIG. 5 shows the structure of memory write data in the first embodiment;
FIG. 6 is a flowchart to help explain the operation of the control unit of the issuing machine in the first embodiment;
FIG. 7 shows the IC card instruction data to which transfer control data is added in the control unit in the first embodiment;
FIG. 8 is a flowchart to help explain the operation of the CPU in the IC card in the first embodiment;
FIG. 9 shows an example of the structure of response data outputted from the IC card in the first embodiment;
FIG. 10 shows another example of the structure of response data outputted from the IC card in the first embodiment;
FIG. 11 is a block diagram to help explain a second embodiment of the present invention;
FIGS. 12A and 12B are flowcharts to help explain the operation of the host computer in the second embodiment;
FIG. 13 shows an issue guide screen appearing on the display section of the host computer in the second embodiment;
FIG. 14 is a flowchart to help explain the operation of the control unit of the issuing machine in the second embodiment;
FIG. 15 is a block diagram to help explain a third embodiment of the present invention;
FIG. 16 is a flowchart to help explain the operation of the host computer in the third embodiment;
FIG. 17 is a flowchart to help explain the operation of the control unit of the issuing machine in the third embodiment;
FIG. 18 is a flowchart to help explain the operation of the CPU in the key card in the third embodiment;
FIG. 19 shows a first modification of the third embodiment and is a flowchart to help explain the operation of the control unit of the issuing machine;
FIG. 20 is a flowchart to help explain the operation of the CPU in the key card in the first modification;
FIG. 21 shows a second modification of the third embodiment and is a flowchart to help explain the operation of the control unit of the issuing machine; and
FIG. 22 is a flowchart to help explain the operation of the CPU in the key card in the second modification.

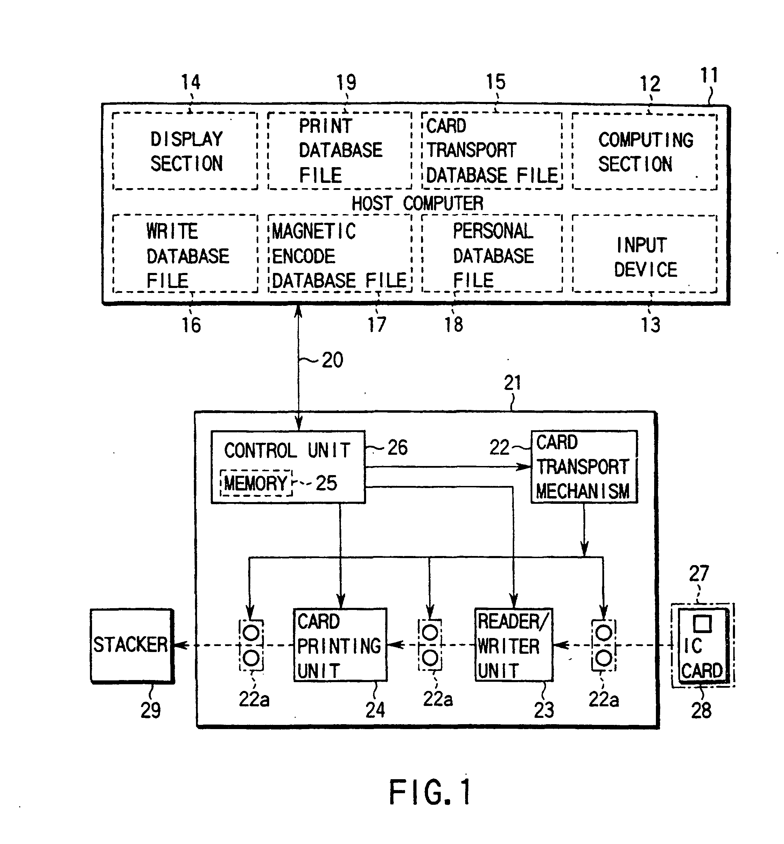

Hereinafter, referring to the accompanying drawings, a first embodiment of the present invention will be explained. In FIG. 1, numeral 11 indicates a host computer functioning as a control section. For example, a personal computer is used as the host computer.. The host computer basically comprises a computing section 12, an input device 13, such as a keyboard, and a display section 14, such as a CRT (cathode ray tube).

The host computer 11 further comprises a memory unit and an auxiliary memory unit that store a card transport database file 15, a write database file 16, a magnetic encode database file 17, a personal database file 18, and a print database file 19.

An issuing machine 21 is connected to the host computer 11 via signal lines 20. The issuing machine 21 includes a card transport mechanism 22, a reader/writer unit 23, a card printing unit 24, and a control unit 26 containing a memory 26.

The card transport mechanism 22 includes a card transport path and sets of transport rollers 22a provided along the card transport path. The card transport mechanism 22 has the function of transporting IC cards 28 in a hopper 27 one by one to the reader/writer unit 23, the function of transporting the IC card processed at the reader/writer unit 23 to the card printing unit 24, and the function of transporting the IC card 28 processed at the card printing unit 24 to a stacker 29.

The IC card 28 houses an IC chip having a nonvolatile data memory and a CPU for controlling the data memory.

The reader/writer unit 23 has the function of inputting the IC card instruction data and status code supplied from the control unit 26 to the IC card 28, that is, writing the data and code into the data memory of the IC card 28, and the function of magnetically recording the magnetic encode data supplied from the control unit 26 onto magnetic stripe tape on the surface of the IC card 28.

The card printing unit 24 has the function of printing on the surface of the IC card 28 on the basis of the print data supplied from the control unit 26.

The control unit 26 controls the card transport mechanism 22, reader/writer unit 23, and card printing unit 24 while making two-way data transfer with the host computer 11.

To perform the principal functions, the host computer 11 includes the following means described in item (1) to item (4):
(1) Means for creating IC card instruction data items necessary to cause a single IC card 28 to function.
(2) Means for creating a specific status code (expected value: 2-byte numerical code) the IC card 28 uses as response data each time the IC card instruction data items created by the above means are entered into the IC card 28.
(3) Means for creating magnetic encode data and print data for the IC card 28.
(4) Transfer means for collectively sending the IC card instruction data items, status code, magnetic encode data, and print data created by the means in items (1) to (3) to the control unit 26 of the issuing machine 21.

To perform the principal functions, the control unit 26 of the issuing machine 21 includes the following means described in item (1) to item (5):
(1) Holding means for storing into the memory 25 the IC card instruction data items, status code, magnetic encode data, and print data sent collectively from the host computer 11.
(2) Input control means for causing the reader/writer unit 23 to input the IC card instruction data items and status code stored in the memory 25 to the IC card 28.
(3) Recording control means for causing the reader/writer unit 23 to magnetically record the magnetic encode data stored in the memory 25 on the magnetic stripe tape on the IC card 28
(4) Printing control means for causing the card printing unit 24 to print on the surface of the IC card 28 on the basis of the print data stored in the memory 25
(5) Control means for sequentially inputting the IC card instruction data items and status code to the IC card 28, while collating the status code sent back from the IC card 28 with the status code held in the memory 25.

To perform the principal functions, the CPU of the IC card 28 includes the following function described in item (1):
(1) Control means which checks whether or not the input has been carried out properly each time the reader/writer unit 23 has inputted the IC card instruction data items and status code to the data memory and, if the input has been performed properly, will send back the status code inputted by the reader/writer unit 23 to the reader/writer unit 23.

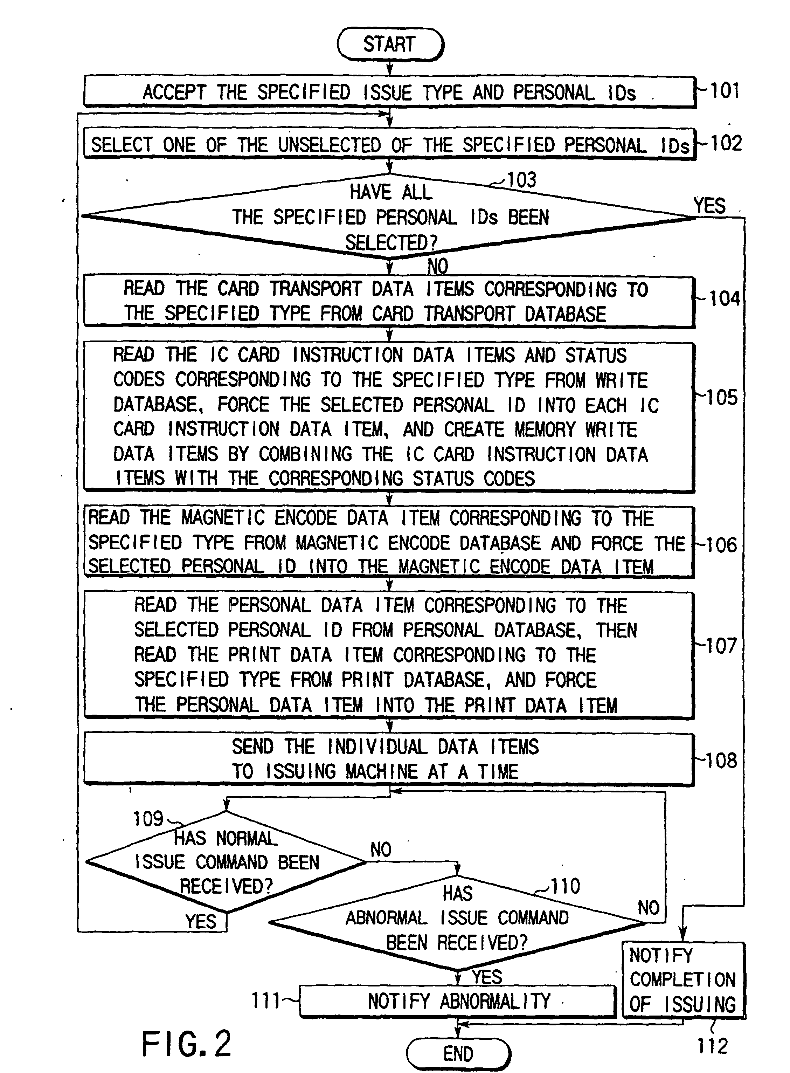

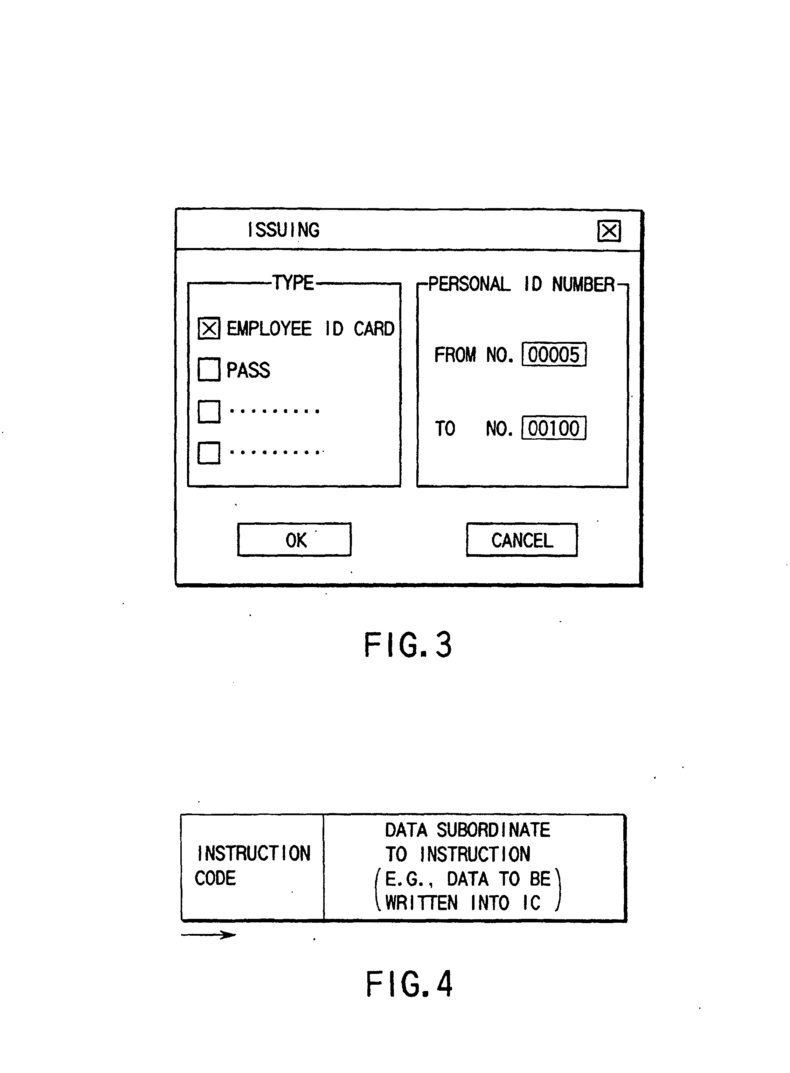

With the above configuration, the operation will be explained. FIG. 2 is a flowchart to help explain the operation of the host computer 11. On the display section 14 of the host computer 11, an issue guide screen appears as shown in FIG. 3. On the issue guide screen, there are an issue type specifying area, a personal identification number specifying area, an OK key area, and a cancel key area.

In the issue type specifying area, there are an employee identification card, a pass, and the like as r types of issue. A check box is provided at the head of each item. When the operator moves the cursor to any one of the check boxes and clicks it, then the mark appears in the box x, meaning that the corresponding item has been specified. FIG. 3 shows that employee identification card has been specified.

In the personal identification number specifying area, there are a window for displaying the initial number of personal identification number (hereinafter, referred to as personal ID) and a window for displaying the last value of personal ID. More than one personal ID can be specified by entering desired numerical values into the windows from the input device 13. FIG. 3 shows that 96 personal IDs ranging from number 00005 to number 00100 have been specified.

When the operator moves the cursor to the OK key area and clicks it, the specifications on the screen are accepted (step 101) and an issuing process is started. First, of the specified IDs, the first personal ID (number 0005) is selected (step 102).

In this case, because only the first personal ID has been selected (NO at step 103), control proceeds to step 104, where the card transport data item corresponding to the specified issue type (hereinafter, referred to as the specified type) is read from the card transport database file 15.

Furthermore, the IC card instruction data items and status codes (expected values) corresponding to the specified type are read from the write database file 16. An IC card instruction data item is made up of an instruction code and subordinate data items added to the instruction code, if necessary, as shown in FIG. 4.

An instruction code is used to set conditions in the CPU of the IC 28 or write subordinate data items into the data memory of the IC card 28. The subordinate data items include selected personal IDs and the period of validity. If the contents of an instruction code are a read command, such as key collation, the subordinate code is unnecessary.

Of the IC card instruction data items and status codes read from the write database 16, those corresponding to each other are combined to create memory write data (step 105).

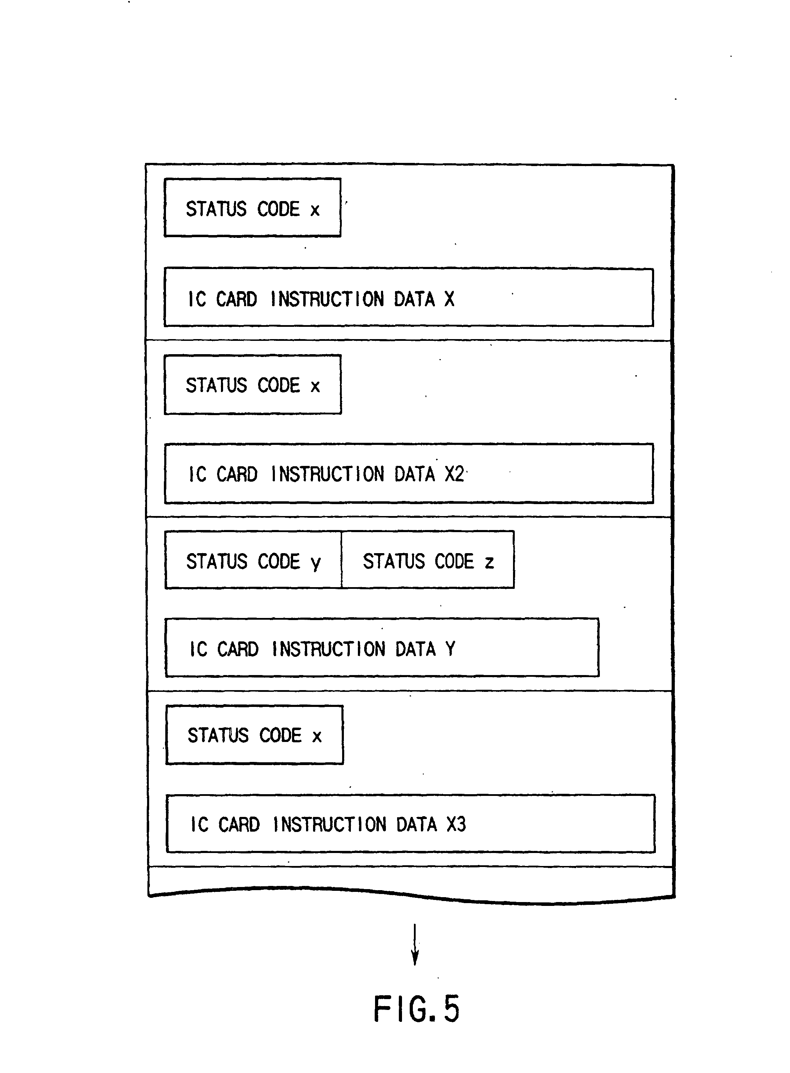

For example, as shown in FIG. 5, a memory write data item is created by combining the IC card instruction data item X with the status code x corresponding to the IC card instruction data item X, by combining the IC card instruction data item X2 with the status code x corresponding to the IC card instruction data item X2, by combining the IC card instruction data item Y with the two status codes y and z corresponding to the IC card instruction data item Y, or by combining the IC card instruction data item X3 with the status code x corresponding to the IC card instruction data item X3. These memory write data items are created in sequence.

The first memory write data item and the second memory write data item have the same status code x. In this case, when the status code x has been omitted from the second memory write data item, the status code x in the first memory write data item is used as the status code for the second memory write data item.

A memory write data item obtained by combining a single IC card instruction data item Y with two status codes y and z is used, taking into account the following thing. The status code y is used as a status code issued when the proper input to the data memory of the IC card 28 has been completed on the basis of the IC card instruction data item Y. The status code z is used as a status code issued when the next input cannot be performed because the write enable area of the data area is full on completion of the proper input.

The magnetic encode data corresponding to the specified type is read from the magnetic encode database file 17. The same selected personal ID and period of validity as those included in the subordinate data in the IC card instruction data are forced into the read magnetic encode data (step 106).

Next, the personal data (including name, address, post, and portrait) are read. At the same time, the print data (including characters, photographs, patterns, and bar codes) corresponding to the specified type are read from the print database file 19. A part (e.g., the name and portrait) of the read personal data are forced into the print data (step 107).

The card transport data item, each memory write data item, magnetic encode data item, and print data item created as described above are sent collectively to the control unit 26 of the issuing machine 21 (step 108).

After the collective data transfer, a normal issue command or an abnormal issue command from the control unit 26 is waited for to arrive (steps 109, 110). The normal issue command is issued when the issuing process for a first IC card 28 has been completed properly in the control unit 26. The abnormal issue command is issued when an abnormality has occurred in the issuing process.

When the normal issue command has been received (YES at step 109), control returns to step 102, where the second personal ID (number 00006) is selected as one of the unselected of the specified personal IDs. On the basis of the selected personal ID, a similar process is repeated to issue a second IC card 28.

When the abnormal issue command has been received (YES at step 110), the display section 14 notifies an abnormality (step 111). This completes the issuing process. When all the specified IDs have been selected (YES at step 103), it is judged that 96 IC cards 28 ranging from number 00005 to number 00100 have been issued and the display section 14 notifies the completion of the issuing (step 112).

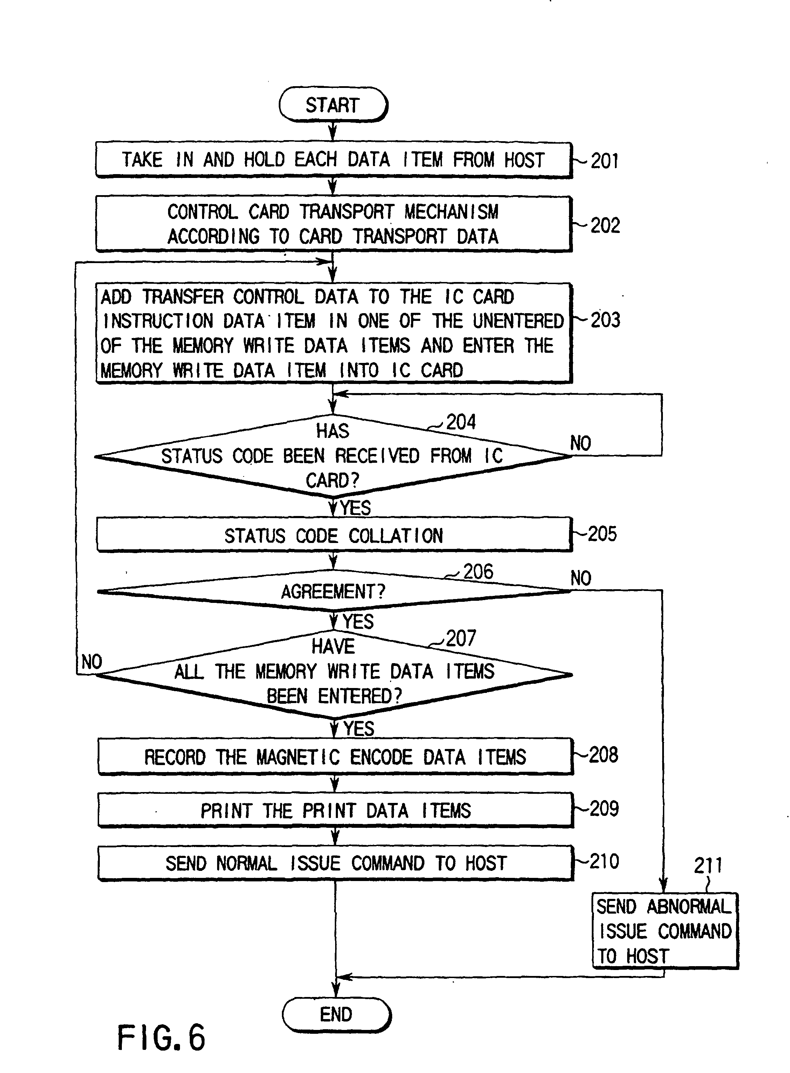

FIG. 6 is a flowchart to help explain the operation of the control unit 26. The card transport data, each memory write data item (IC card instruction data item + status code), magnetic encode data, and print data sent collectively from the host computer 11 are taken in and stored in the memory 25 (step 201).

On the basis of the card transport data stored in the memory 25, the card transport mechanism 22 is controlled (step 202).

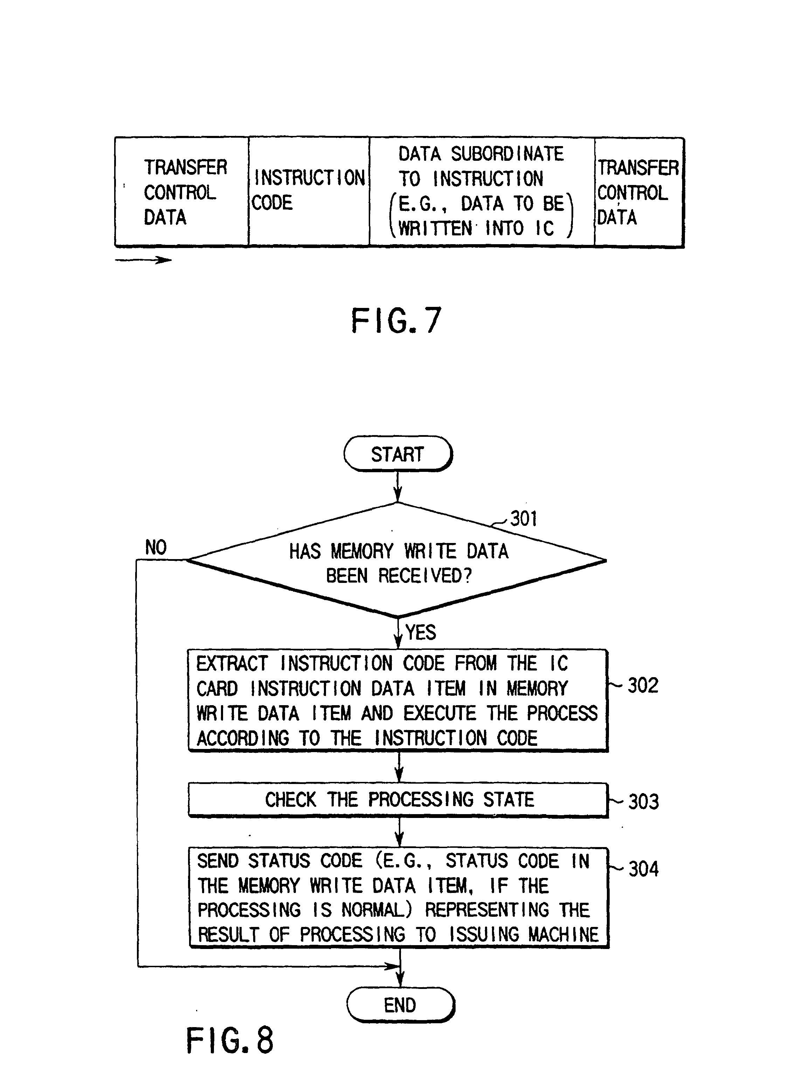

Of the memory write data items stored in the memory 25, one of the items that have not been entered into the IC card 28 is selected. As shown in FIG. 7, transfer control data is added to both the head and the end of the IC card instruction data item (instruction code + subordinate data) in the selected memory write data item.

The transfer control data item at the head is for determining the procedure for transferring the IC card instruction data to the IC card 28. The transfer control data item at the end includes parity check data. The memory write data item to which the transfer control data items have been added is entered by the reader/writer unit 23 into the data memory of the IC card 28 (step 203).

After the entry, the status code from the IC card 28 is waited for to arrive (step 204). When the status code from the IC card 28 has been received (YES at step 204), the status code is collated with the status code in the previously selected memory write data item (step 205).

Then, when the status codes coincide with each other (YES at step 206), it is judged whether or not all the memory write data items stored in the memory 25 have been inputted to the IC card 28 (step 207). Because only one memory write data item has been entered into the IC card 28 (NO at step 207), control goes to step 203, where another unentered memory write data item is selected again. After this, a similar input process is repeated.

After all the memory write data items stored in the memory 25 have been entered into the IC card 28 (YES at step 207), control data unique to the magnetic track is added to the magnetic encode data stored in the memory 25. The reader/writer unit 23 magnetically records the resulting data onto magnetic stripe tape on the surface of the IC card 28 (step 208).

The print data stored in the memory 25 is supplied to the card printing unit 24 and printing is done according to the layout previously defined on the surface of the IC card 28 (step 209). Then, a normal issue command indicating that the issuing process for the first IC card 28 has been completed properly is sent to the host computer 11 (step 210).

When the memory write data items are entered into the IC card 28, if the received status code returned from the IC card 28 disagrees with the status code in the selected memory write data item (NO at step 206), an abnormal issue command will be sent to the host computer (step 211).

Next, FIG. 8 is a flowchart to help explain the operation of the CPU of the IC card 28. Each time the reader/writer unit 23 enters a memory write data item (IC card instruction data item + status code) (step 301), an instruction code is extracted from the IC card instruction data item in the memory write data item and the process corresponding to the instruction code is executed (step 302).

Then, a check is made to see if the memory write data has been inputted properly (step 303) and a status code indicating the result of the check is sent to the read/writer unit 23 (step 304).

Specifically, if the memory write data has been inputted properly, the status code in the memory write data item entered by the reader/writer unit 23 is returned as it is to the reader/writer unit 23. If the input is abnormal, a status code previously registered in the IC card 28 is sent to the reader/writer unit 23.

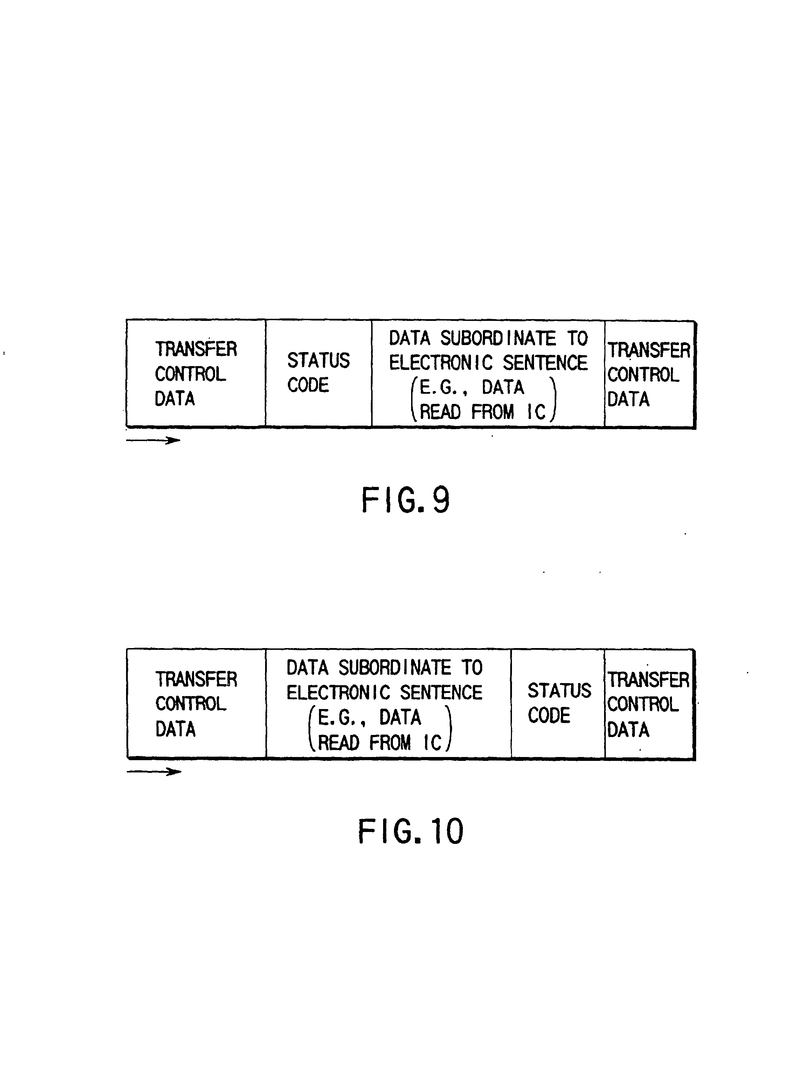

The status code is sent to the reader/writer unit 23 in such a manner that it is included in the response data in the format shown in FIG. 9 or FIG. 10. The response data is made up of transfer control data at the head, a status code, subordinate data added if necessary, and transfer control data at the end.

The transfer control data at the head is for determining the procedure for transferring the response data to the issuing machine 21. The transfer control data at the end is parity check data or the like.

With the first embodiment, because the individual data items (including the status code) created at the host computer 11 are sent collectively to the issuing machine 21, the data will not be transferred between the host computer 11 and the issuing machine 21 many times, which helps reduce the time required to issue an IC card 28.

When the input to the IC card 28 has been carried out properly, the status code the IC card 28 is to output as response data is created as an expected value at the host computer 11. The status code, together with the IC card instruction code, is given to the IC card 28.

As a result, for example, even when an IC card 28 using codes different from usual ones has been set as an object to be issued, the status code in the IC card 28 never fails to coincide with the status code in the issuing machine 21. This prevents the problem of ending the issuing process although the input has been performed properly, which assures the valid issuing process without errors.

In the first embodiment, for example, after memory write data items have been created and inputted to the IC card 28, when the process of reading specific data from the IC card 28, sending the data from the issuing machine 21 to the host computer 11, and manipulating the data is needed to create more memory write data items, collective data transfer from the host computer 11 to the issuing machine 21 is performed in two or more sessions.

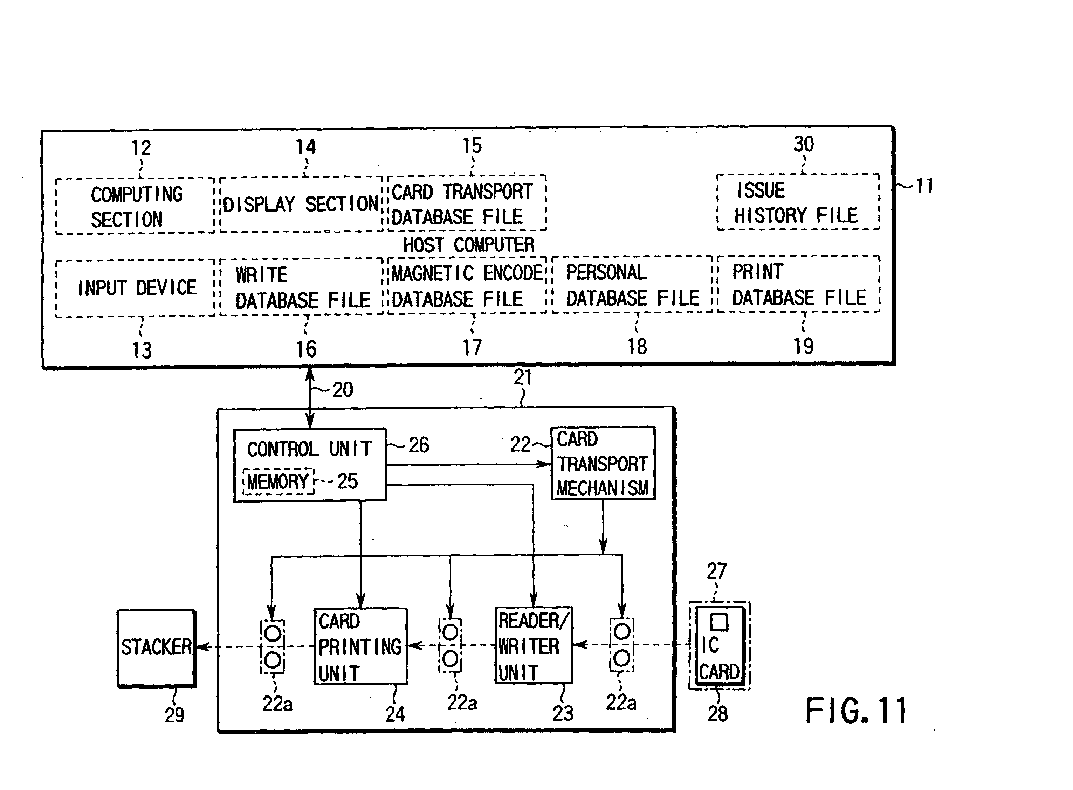

Hereinafter, a second embodiment of the present invention will be explained in detail by reference to the accompanying drawings. In FIG. 11, the same parts as those in FIG. 1 are indicated by the same reference symbols. In the memory unit and auxiliary memory unit of the host computer 11, an issue history file 30 is stored in addition to the aforementioned files 15 to 19.

To perform the principal functions, the host computer 11 includes the following means described in item (1) to item (3):
(1) Means for selectively creating the externally specified one of the following: memory write data items to be inputted to the IC card 28 [composed of IC card instruction data items required to cause the IC card 28 to function and a specific status code (an expected value: 2-byte numerical code) the IC card 28 uses as response data when the IC card instruction data has been entered into the IC card 28]; magnetic encode data for the IC card 28; and print data for the IC card 28.
(2) Means for storing the contents of the data creating process selectively executed by the above means into the issue history file 30 as issue history data and creating uncreated data items according to an externally supplied continuous issuing command on the basis of the issue history data.
(3) Transfer means for sending the created data items collectively to the control unit 26 in the issuing machine 21.

The control unit 26 in the issuing machine 21 includes means (1) to (5) for realizing similar principal functions to those explained in the first embodiment. The CUP in the IC card 28 includes means (1) for realizing a similar principal function to that explained in the first embodiment.

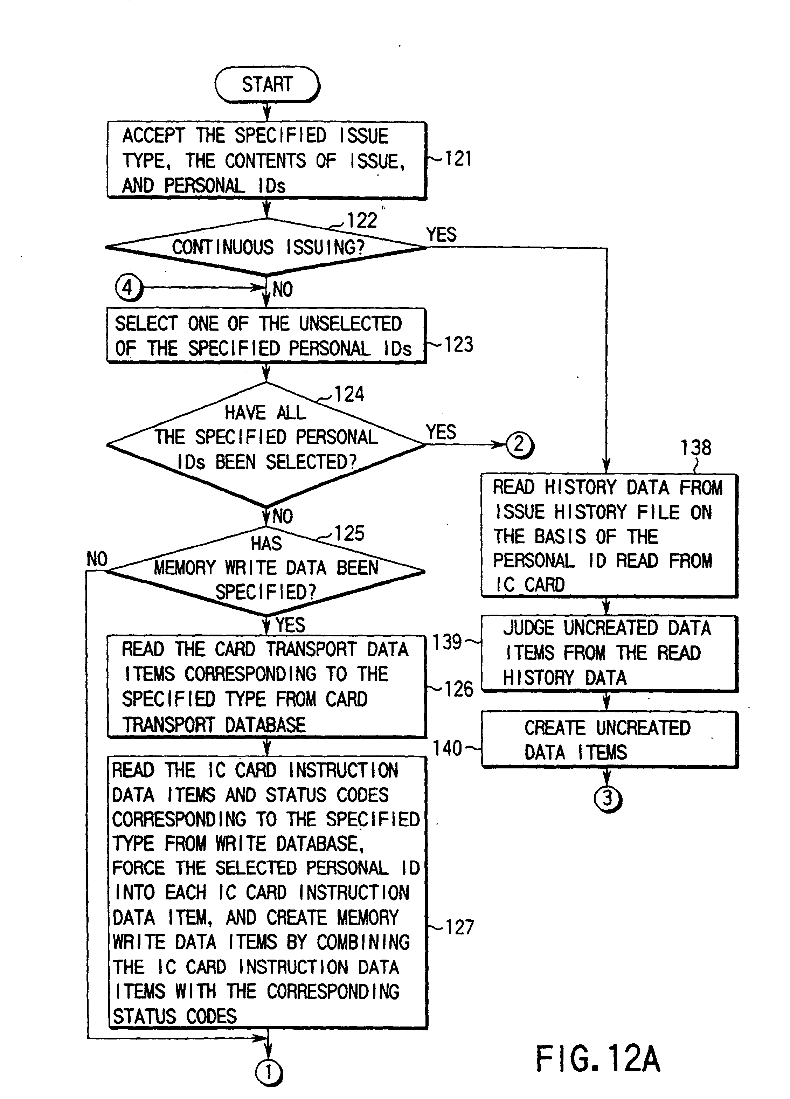

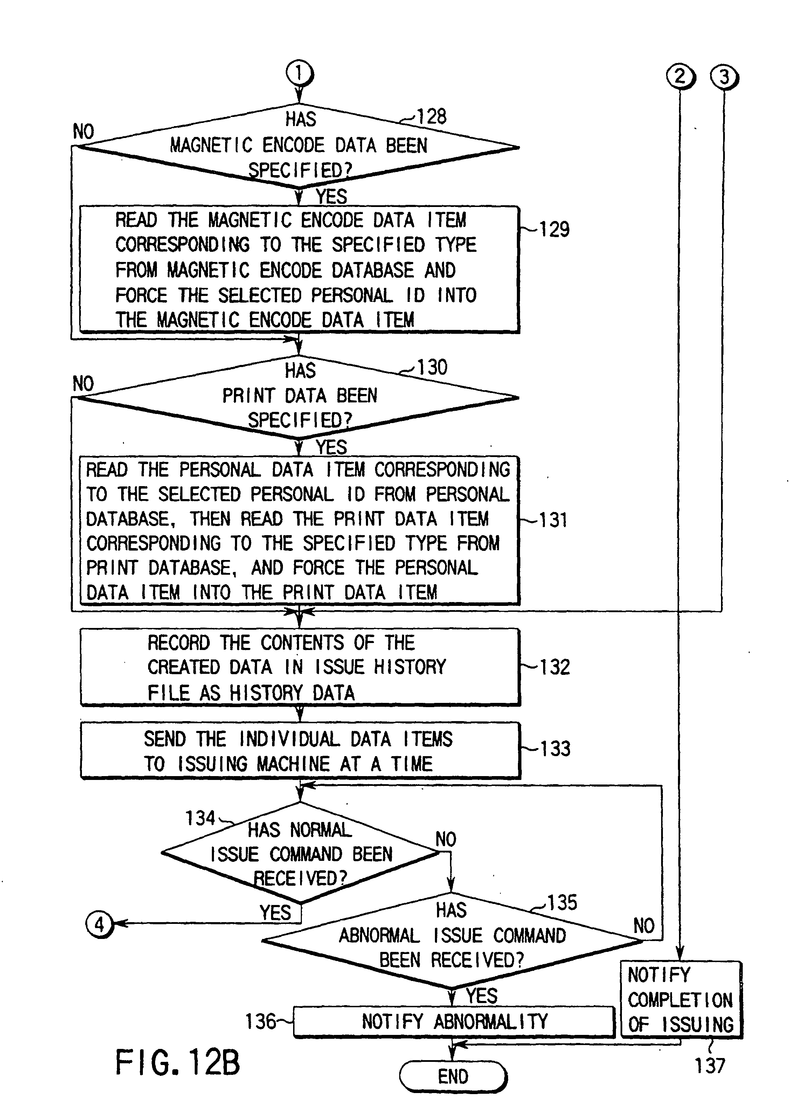

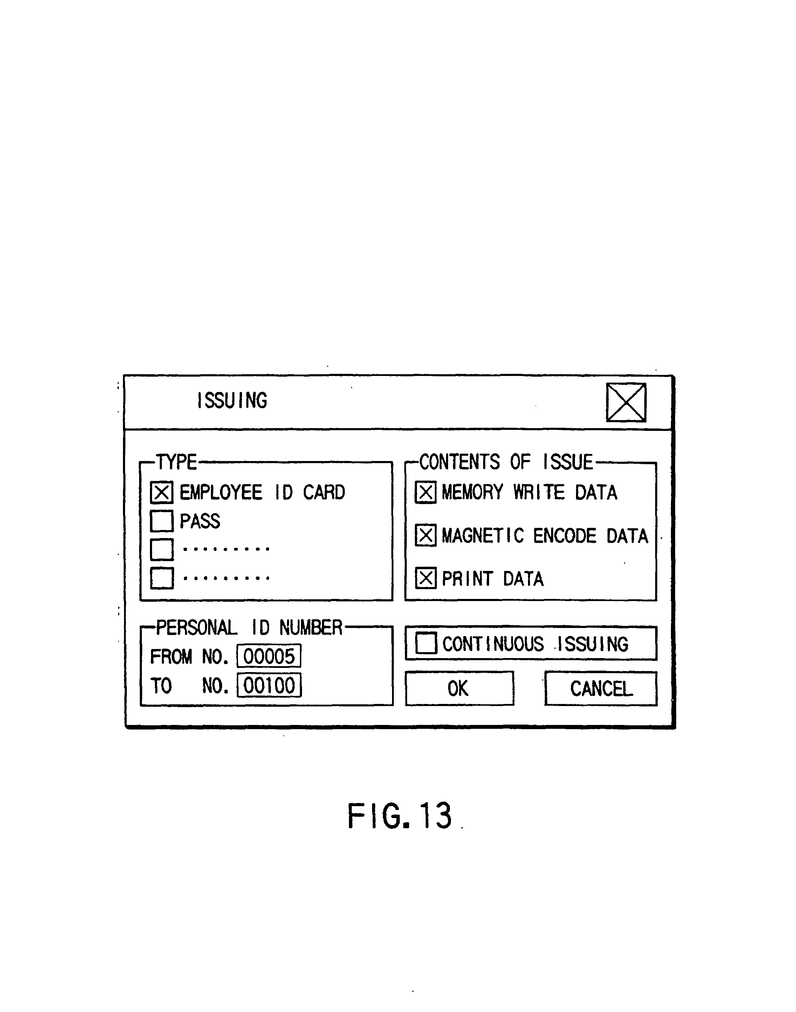

The operation of the second embodiment having the above configuration will be explained below. FIGS. 12A and 12B are flowcharts to help explain the operation of the host computer 11. On the display section 14 of the host computer 11, an issue guide screen as shown in FIG. 13 appears. On the issue guide screen, there are an issue content specifying area and a continuous issuing specifying area in addition to the respective areas shown in FIG. 3.

In the issue content specifying area, there are memory write data, magnetic encode data, and print data as the contents of issue. A check box is provided for each item. In the initial mode, the mark × is placed in each of the check boxes (which means the corresponding items have been specified). By laying the cursor on any one of the check boxes and clicking the box, the mark × in the box is deleted (which means that the specification of the corresponding item has been canceled). In FIG. 13, all the items for memory write data, magnetic encode data, and print data have been specified.

In the continuous issuing specifying area, only one check box is present. When the cursor is laid on the check box and the box is clicked, the mark × appears in the box, thereby specifying continuous issuing.

When the operator lays the cursor on the OK key area and clicks the area, the specified information on the issue guide screen is accepted (step 121) and the issuing process is started. If continuous issuing has not been specified (NO at step 122), the personal ID (number 00005) at the head will be selected as one of the unselected of the specified personal IDs (step 123).

In this case, because only the personal ID at the head has been selected (NO at step 124), control proceeds to step 125, where it is judged whether or not memory write data has been specified. If memory write data has been specified (YES at step 125), the card transport data item corresponding to the specified type will be read from the card transport database file 15 (step 126).

Furthermore, the IC card instruction data items and status codes (expected values) corresponding to the specified type are read from the write database file 16. Then, memory write data items are created by combining the IC card instruction data items with the corresponding status codes (step 127).

Thereafter, it is judged whether or not magnetic encode data has been specified (step 128). If magnetic encode data has been specified (YES at step 128), the magnetic encode data item corresponding to the specified type will be read from the magnetic encode database file 17 and the same selected personal ID and period of validity as those in the subordinate data in the IC card instruction data item will be forced into the read magnetic encode data item (step 129).

Next, it is judged whether or not print data has been specified (step 130). If print data has been specified (YES at step 130), the personal data (including name, address, post, and portrait) corresponding to the selected personal ID will be read from the personal database file 18, the print data (including characters, photographs, patterns, and bar codes) corresponding to the specified type will be read from the print database file 19, and a part (name and portrait) of the read personal data will be forced into the print data (step 131).

In this way, the memory write data items, magnetic encode data, and print data are selectively created and the issue history data is recorded in the issue history file 30 (step 132). The issue history data item is such that the selected personal ID is caused to correspond to the contents of the data creating process. Then, the created data items are sent collectively to the control unit 26 of the issuing machine 21 (step 133).

After the collective data transfer, the normal issue command or abnormal issue command from the control unit 26 is waited for to arrive (steps 134, 135). The normal issue command is issued from the control unit 26 when the issuing process of a first IC card 28 has been completed properly. The abnormal issue command is issued when an abnormality has occurred in the issuing process.

When the normal issue command has been received (YES at step 134), control returns to step 122, where the second personal ID (number 00006) is selected as one of the unselected of the specified personal IDs. On basis of the selected personal ID, a similar process is repeated to issue a second IC card 28.

When the abnormal issue command has been received (YES at step 135), the display section 14 notifies an abnormality (step 136). This completes the issuing process. When all the specified IDs have been selected (YES at step 124), it is judged that 96 IC cards 28 ranging from number 00005 to number 00100 have been issued and the display section 14 notifies the completion of the issuing (step 137).

At the stage where one or two of the memory write data items, magnetic encode data items, and print data items have been specified and created, the issuing process is still in progress and the issuing process of uncreated data items has not been completed. To execute the remaining issuing process, the IC card 28 in the middle of the issuing process is set in a hopper 27 and CONTINUOUS ISSUING is specified on the issue guide screen on the display section 14.

When CONTINUOUS ISSUING has been specified (YES at step 122), the IC card 28 (in the middle of the issuing process) in the hopper 27 is sent to the reader/ writer 23, which reads the personal ID written in the data memory of the IC card 28. Then, the issue history data item corresponding to the personal ID is read from the issue history file 30 (step 138).

The issue history data item read from the issue history file 30 includes the contents of the data creating process already carried out. On the basis of the issue history data item, it is judged what are the uncreated data items (step 139). Then, the data items are created (step 140).

For example, when the uncreated data is memory write data, step 126 and step 127 are executed to create memory write data items. When the uncreated data is magnetic encode data, step 129 is executed to create a magnetic encode data item. When the uncreated data is print data, step 131 is executed to create memory a print data item.

After the remaining data items have been created, the issue history data is recorded again in the issue history file 30 (step 132). The issue history data is such that the selected personal ID is caused to correspond to the contents of the data creating process. Then, the created data items are sent collectively to the control unit 26 of the issuing machine 21 (step 133).

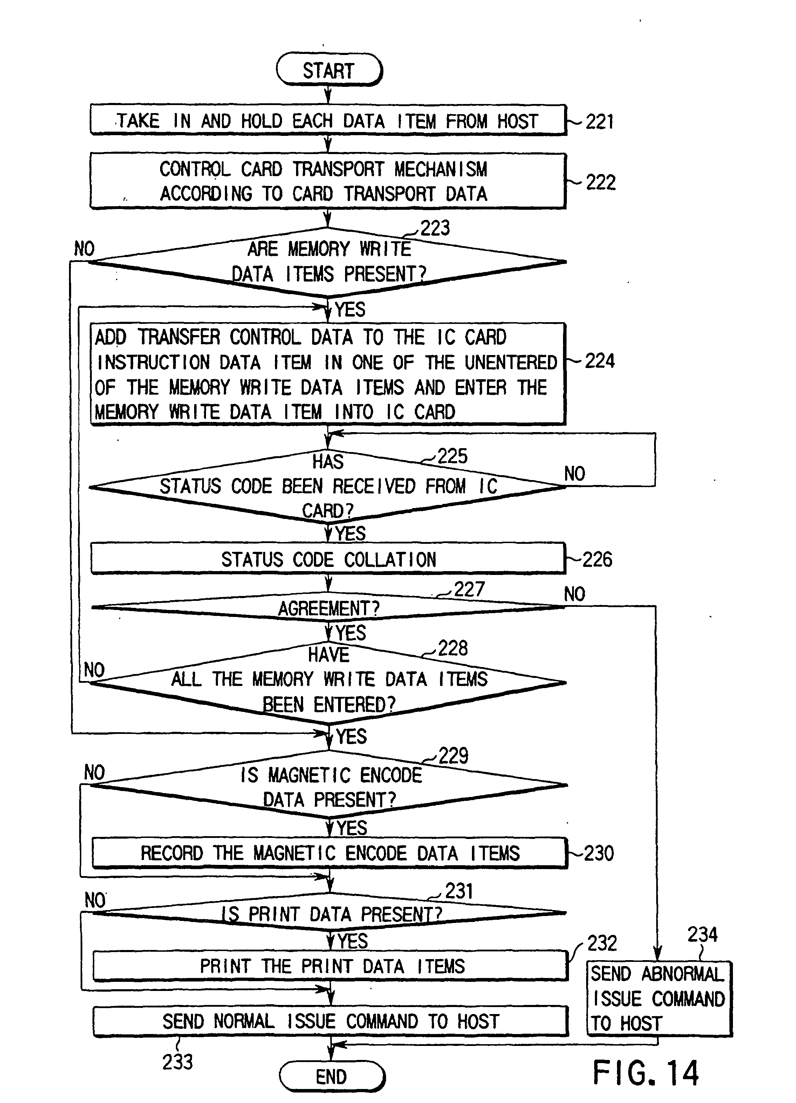

FIG. 14 is a flowchart to help explain the operation of the control unit 26. The data sent from the host computer 11 are taken in by the control unit 26 and stored in the memory 25 (step 221). On the basis of the card transport data stored in the memory 25, the card transport mechanism 22 is controlled (step 222).

Thereafter, it is judged whether or not more than one memory write data item is included in the data items stored in the memory 25 (step 223). If more than one memory write data item is stored in the memory 25 (YES at step 223), one of the memory write data items not entered into the IC card 28 is selected. Then, transfer control data is added to the head and end of the IC card instruction data item (instruction code + subordinate data item) in the selected memory write data item as shown in FIG. 7.

Then, the reader/writer unit 23 records the transfer-control-data-added memory write data item into the data memory of the IC card 28 (step 224). After the input, the status code from the IC card 28 is waited for to arrive (step 225). When the status code from the IC card 28 has been received (YES at step 225), the status code is collated with the status code in the previously selected memory write data item (step 226).

Then, when the two status codes coincide (YES at step 227), it is judged whether or not all the memory write data items stored in the memory 25 have been entered into the IC card 28 (step 228). Because only one memory write data item has been entered into the IC card 28 (NO at step 228), control proceeds to step 224, where another unentered memory write data item is selected. After this, a similar input process is repeated until all the memory write data items stored in the memory 25 have been entered into the IC card 28 (YES at step 228).

On the other hand, it is judged whether or not magnetic encode data is included in the data items stored in the memory 25 (step 229). If magnetic encode data is stored in the memory 25 (YES at step 229), control data unique to the magnetic track is added to the magnetic encode data. The reader/writer unit 23 magnetically records the control-data-added encode data onto magnetic stripe tape on the surface of the IC card 28 (step 230).

Next, it is judged whether or not print data is included in the data items stored in the memory 25 (step 231). If the print data is stored in the memory 25 (YES at step 231), the print data will be supplied to the card printing unit 24, which will print on the surface of the IC card 28 according to a predefined layout (step 232). Then, a normal issue command indicating that the issuing process of the first IC card 28 has been completed is sent to the host computer 11 (step 233).

When the memory write data item is inputted to the IC card 28, if the received status code returned from the IC card 28 disagrees with the status code in the selected memory write data item (NO at step 227), an abnormal issue command will be sent to the host computer (step 234).

The data items sent from the host computer 11 include the ones created in the first data creating process and the ones created in the second or later data creating process. Either data item will be processed at step 221 to step 234.

The operation of the CPU in the IC card 28 is the same as that explained according to the flowchart of FIG. 8, so explanation will be omitted.

With the second embodiment, of the memory write data, magnetic encode data, and print data, the one specified by the operator is selectively created. On the basis of the created data, an IC card 28 is issued. This makes it possible to carry out all of the issuing process collectively. In addition, for example, when the operator is busy and has not enough time to deal with the issuing process, he or she can carry out part of the issuing process first and the remainder later, depending on the circumstances.

Like the first embodiment, the second embodiment produces not only the effect of shortening the time required to issue an IC card 28 but also the effect of performing the valid issuing process without errors even when, for example, an IC card 28 using codes different from usual ones is set as an object to be issued.

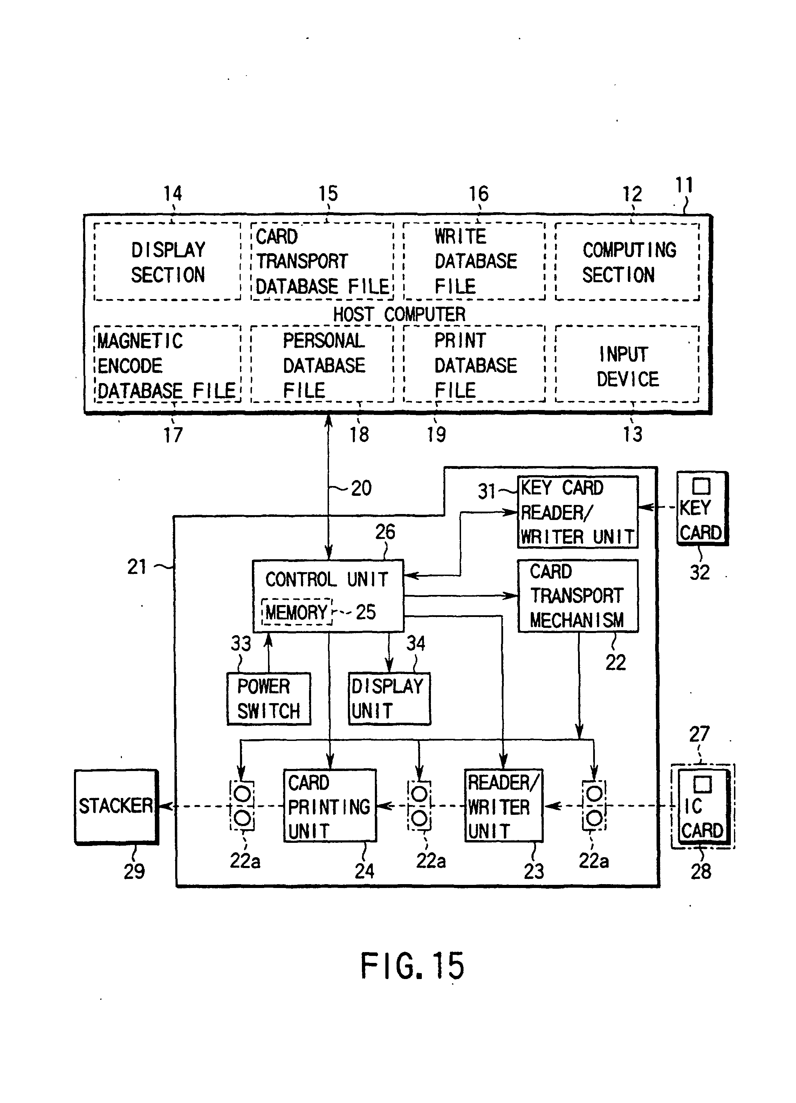

Hereinafter, a third embodiment of the present invention will be explained in detail by reference to the accompanying drawings. In FIG. 15, the same parts as those in FIG. 1 are indicated by the same reference symbols. The issuing machine 21 includes a key card reader/writer unit 31.

The key card reader/writer unit 31 enables the insertion and removal of an identification medium the operator has, such as a key card 32. The unit 31 exchanges data with the inserted key card 32. The key card 32 is an IC card given only to a person who has the authority to perform the issuing process with the IC card issuing apparatus. The card 32 has a data memory and an IC chip with a CPU for controlling the memory. The data memory stores type identification data representing the type of the key card 32 and card certification data (medium certification data) unique to the key card 32.

The control unit 26 of the issuing machine 21 houses a memory 25. It is also provided with a power switch 33 and a display unit 34. While performing two-way data transfer with the host computer 11 via signal lines 20, the control unit 26 controls the card transport mechanism 22, reader/writer unit 23, card printing unit 24, and key card reader/writer unit 23. The power switch 33 is provided to turn on and off the operating power supply voltage of the issuing machine 21.

The host computer 11 includes means (1) to means (5) for realizing similar principal functions to those explained in the first embodiment. The control unit 26 of the issuing machine 21 includes not only means (1) to means (5) for realizing similar principal functions to those explained in the first embodiment but also the following means (6) and (7) for executing further principal functions:
(6) Judging means which takes in the type identification data from the card (a key card 32 or another card) in the key card reader/writer unit 31) when the operating power supply voltage is turned by the on operation of the power switch 33 (when the apparatus is started), judges the type of the card, takes in the card certification data from the key card 32 when the judged type is that of the key card 32 corresponding to the IC card issuing apparatus, collates the card certification data with the medium certification data stored in the memory 25, and judges the key card 32 to be valid when the result of the collation shows that they coincide.
(7) Control means for permitting the operation of the issuing machine 21 or the issuing process when the judging means has judged that the key card 32 is valid.

To executed a principal function, the CPU of the key card 32 includes the following means explained in item (1):
(1) Control means which sends the type identification data stored in the internal data memory to the key card reader/writer unit 31 when being activated by the operating voltage from the key card reader/writer unit 31 and thereafter sends the card certification data stored in the internal data memory to the key card reader/writer unit 31 when receiving a read command from the key card reader/writer unit 31.

The CPU of the IC card 28 further includes means (1) for realizing a similar principal function to that explained in the first embodiment.

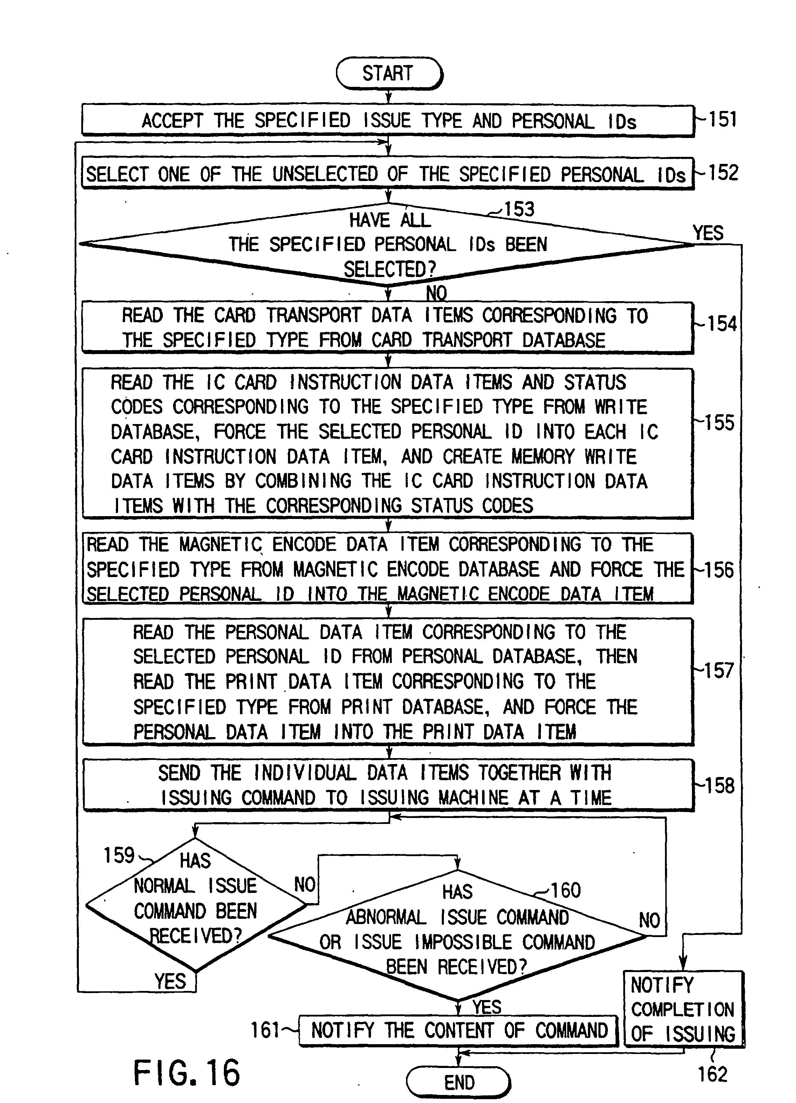

The operation of the third embodiment having the above configuration will be explained. FIG. 16 is a flowchart to help explain the operation of the host computer 11. In FIG. 16, the processes at step 151 to step 157 are the same as those at step 101 to step 107, so explanation of them will be omitted.

The card transport data, memory write data, magnetic encode data, and print data created by the processes at step 151 to step 157, together with an issue command, are sent collectively to the control unit 26 of the issuing machine 21 (step 158).

After the collective data transfer, a normal issue command, an abnormal issue command, or an issue impossible command from the control unit 26 is waited for to arrive (steps 159, 160). The normal issue command is issued when the issuing process of an IC card 28 has been completed properly in the control unit 26. The abnormal issue command is issued when an abnormality has occurred in the issuing process. The issue impossible command is issued when there is a possibility that the issuing process will be performed illegally.

When the normal issue command has been received (YES at step 159), control returns to step 152, where the next personal ID (number 00006) is selected as one of the unselected of the specified personal IDs. On the basis of the selected personal ID, a similar process is repeated to issue the next IC card 28.

When the abnormal issue command or issue impossible command has been received (YES at step 160), the display section 14 notifies the contents of the command (step 161). This completes or inhibits the issuing process. When all the specified IDs have been selected (YES at step 153), it is judged that 96 IC cards 28 ranging from number 00005 to number 00100 have been issued and the display section 14 notifies the completion of the issuing (step 162).

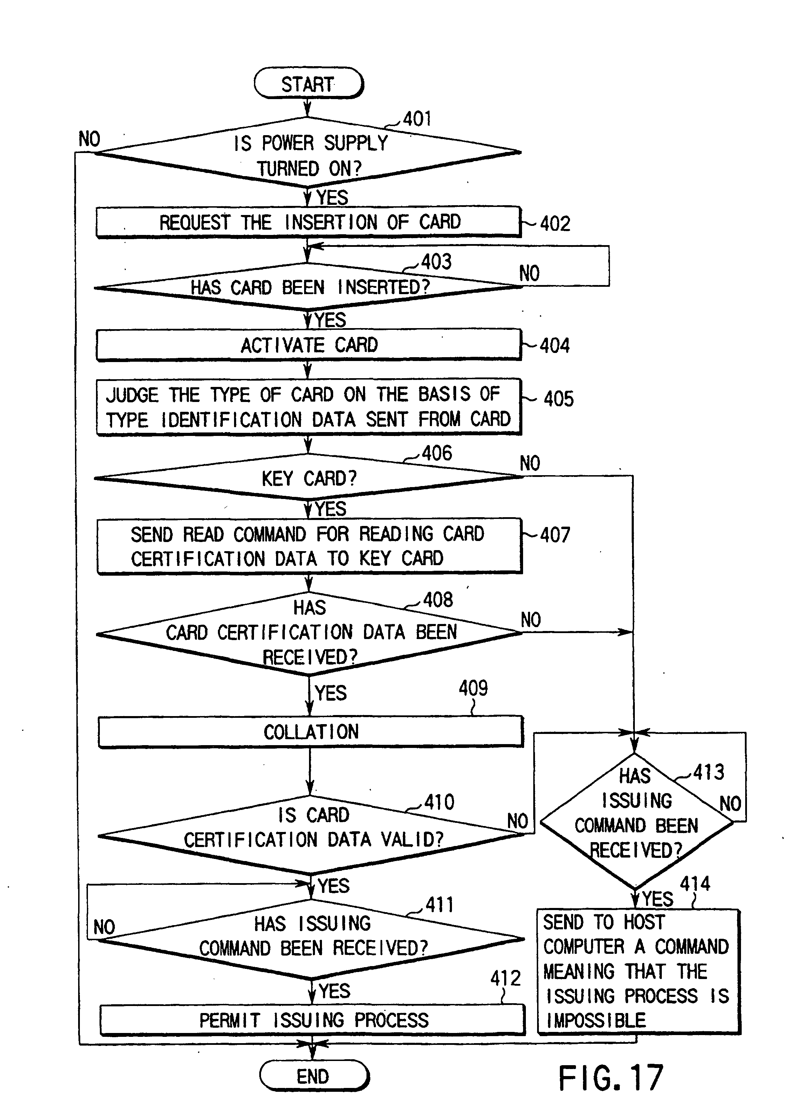

The control unit 26 in the issuing machine 21 basically operates according to the flowchart shown in FIG. 6, so explanation of this part of the operation will be omitted. When the operating power supply voltage is turned on by the on operation of the power switch 33, the control unit 26 operates according to the flowchart shown in FIG. 17.

When the power switch 33 turns on the operating power supply voltage (YES at step 401), a prompt appears on the display unit 34 (step 402). The prompt requests the operator to insert the key card 32 into the key card reader/writer unit 31.

When a card (it is still unknown whether it is the key card 32 or not) is inserted in the key card reader/writer unit 31 (YES at step 403), electricity is supplied to the inserted card via the key card reader/writer unit 31 (step 404). This activates the inserted card, which causes the card to send the type identification data. On the basis of the type identification data, the type of the card is determined (step 405).

If the inserted card is the key card 32 corresponding to the IC card issuing apparatus, not, for example, an employee identification card or a pass (YES at step 406), a read command for reading the card certificate data will be sent to the key card 32 (step 407).

After the key card 32 has sent the card certificate data in response to the read command (YES at step 408), the sent card certificate data is collated with the medium certificate data stored in the memory 25 (step 409). If the result of the collation has shown that they coincide, it will be judged that the key card 32 is valid (YES at step 410). Namely, the operator is authorized to perform the issuing process.

When the key card 32 has been judged to be valid (YES at step 410), the issuing process with the issuing machine 21 is allowed (step 412) on the basis of the reception of the issuing command from the host computer 11 (YES at step 411).

On the other hand, when the result of the collation has shown that they disagree, the key card 32 is judged to be invalid (No at step 410). Namely, the operator is judged to be an unauthorized person without the right to perform the issuing process. In the case where the key card 32 has been judged to be invalid (NO at step 410), when the issuing command from the host computer 11 has been received (YES at step 413), an issue impossible command indicating that the issuing process is impossible is sent to the host computer 11 (step 414).

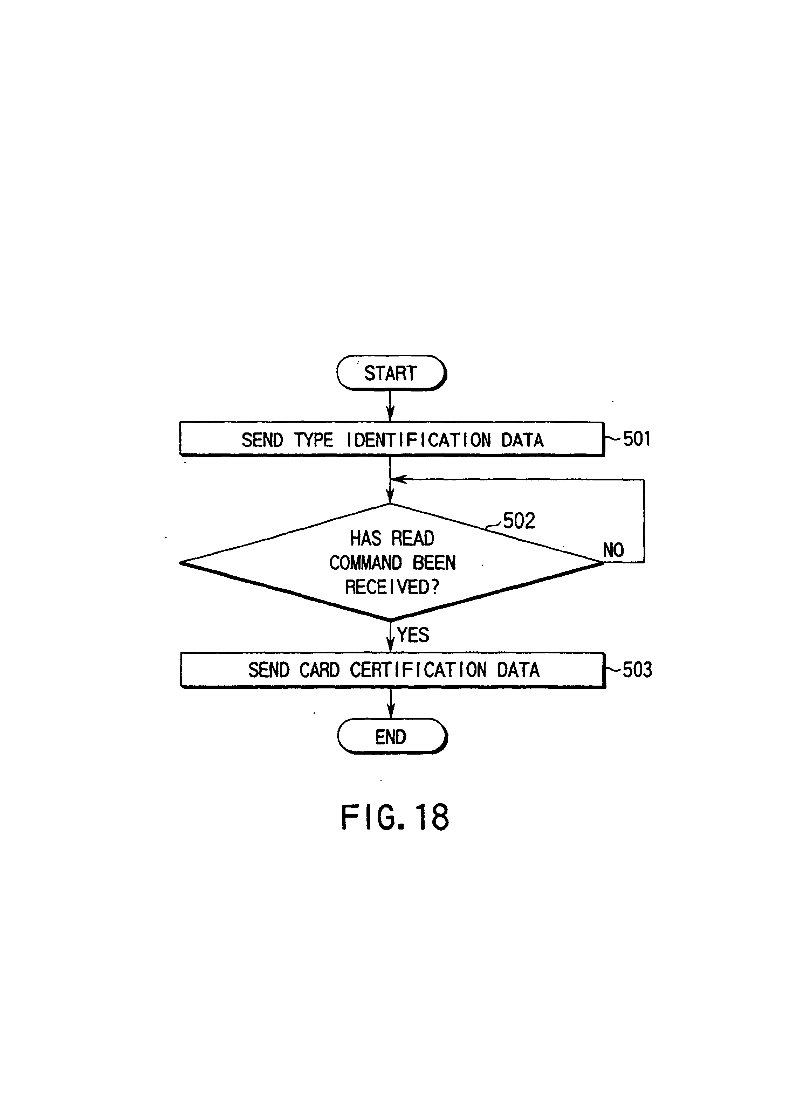

FIG. 18 is a flowchart to help explain the operation of the CPU of the key card 32. Being activated by the operating voltage from the key card reader/writer unit 31, the CPU causes the type identification data in the data memory of the key card 32 to be sent to the key card reader/writer unit 31 (step 501).

Thereafter, when the read command from the key card reader/writer unit 31 has been received (YES at step 502), the card certificate data stored in the internal data memory is sent to the key card reader/writer unit 31 (step 503).

Because the remaining operation of the CPU in the IC card 28 is the same as that explained according to the flowchart shown in FIG. 8, its explanation will be omitted.

With the third embodiment, it is judged whether or not the card inserted by the operator is valid. Only when the result of the judgment has shown that the card is valid, the issuing process with the issuing machine 21 is allowed. As a result, for example, even if an unauthorized person attempts to connect his own computer to the issuing machine 21 and issue an IC card illegally by creating IC card instruction data, magnetic encode data, and print data, the issuing will be prevented. Therefore, it is possible to improve the security and reliability of the issuing of IC cards 28.

Like the first and second embodiments, the third embodiment produces not only the effect of shortening the time required to issue an IC card 28 but also the effect of performing the valid issuing process without errors even when, for example, an IC card 28 using codes different from usual ones is set as an object to be issued.

Next, a first modification of the third embodiment will be explained. In the first modification, instead of the aforementioned judging means (6), judging means explained in item (6a) below is used as functional means the control unit 26 of the issuing machine 21 has:
(6a) Judging means which takes in the type identification data from the card (the key card 32 or another card) inserted in the key card reader/writer unit 31 when the operating power supply voltage is turned on by the on operation of the power switch 33 (when the apparatus is started) and judges the type of the card. When the judged type is that of the key card 32 corresponding to the IC card issuing apparatus, the judging means sends a key collate instruction data to the key card 32 and causes the CPU of the key card 32 to collate the key data in the key collate instruction data with the key data stored in the key card 32. Then, the result of the collation is taken in by the control unit 26, When the result has shown that they coincide, the judging means judges that the key card 32 is valid.

Furthermore, in the first modification, instead of the aforementioned control means (1), control means explained in item (1a) below is used as the functional means the CPU of the key card 32 has:
(1a) Control means which sends the type identification data in the internal data memory to the key card reader/writer unit 31 when being activated by the operating voltage from the key card reader/writer unit 31, thereafter collates the key data in the key collate instruction data with the key data stored in the internal data memory when receiving the key collate instruction data from the key card reader/writer unit 31, and sends the result of the collation to the key card reader/writer unit 31.

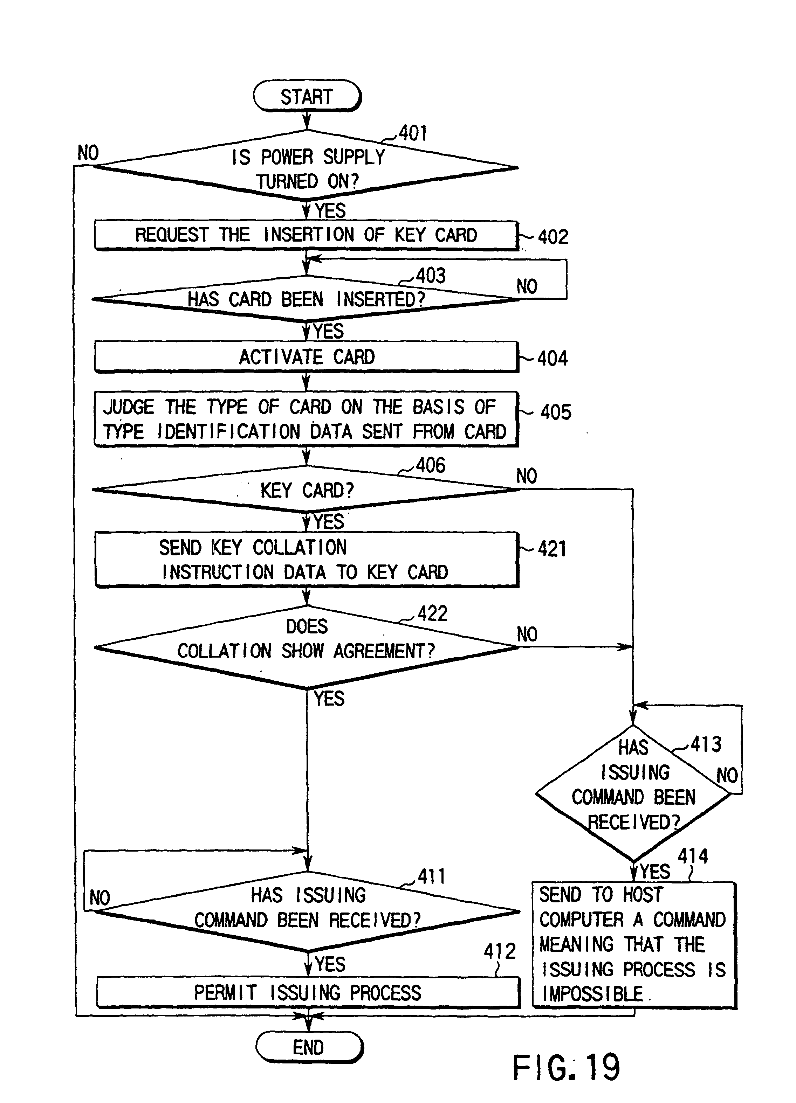

The operation of the first modification having the above configuration will be explained. FIG. 19 is a flowchart to help explain the operation of the control unit 26 of the issuing machine 21. As shown in FIG. 19, the processes at step 421 and step 422 are executed in place of the processes at step 407 to step 410.

If the card inserted in the key card reader/writer unit 31 is the key card 32 corresponding to the IC card issuing apparatus, not an employee identification card or a pass (YES at step 406), key collate instruction data will be sent to the key card 32 (step 421).

The result of the collation on the basis of the key collate instruction data is taken in from the key card 32. If the result has shown coincidence (YES at step 422), it will be judged that the key card 32 is valid (the operator has the authority to perform the issuing process). From this judgment, the issuing process with the issuing machine 21 will be permitted (step 412) on reception of the issuing command from the host computer 11 (YES at step 411).

If the result has shown disagreement (NO at step 422), it will be judged that the key card 32 is invalid (the operator has no authority to perform the issuing process). From this judgment, an issue impossible command indicating that the issuing process is impossible will be sent to the host computer 11 (step 414) on reception of the issuing command from the host computer 11 (YES at step 413).

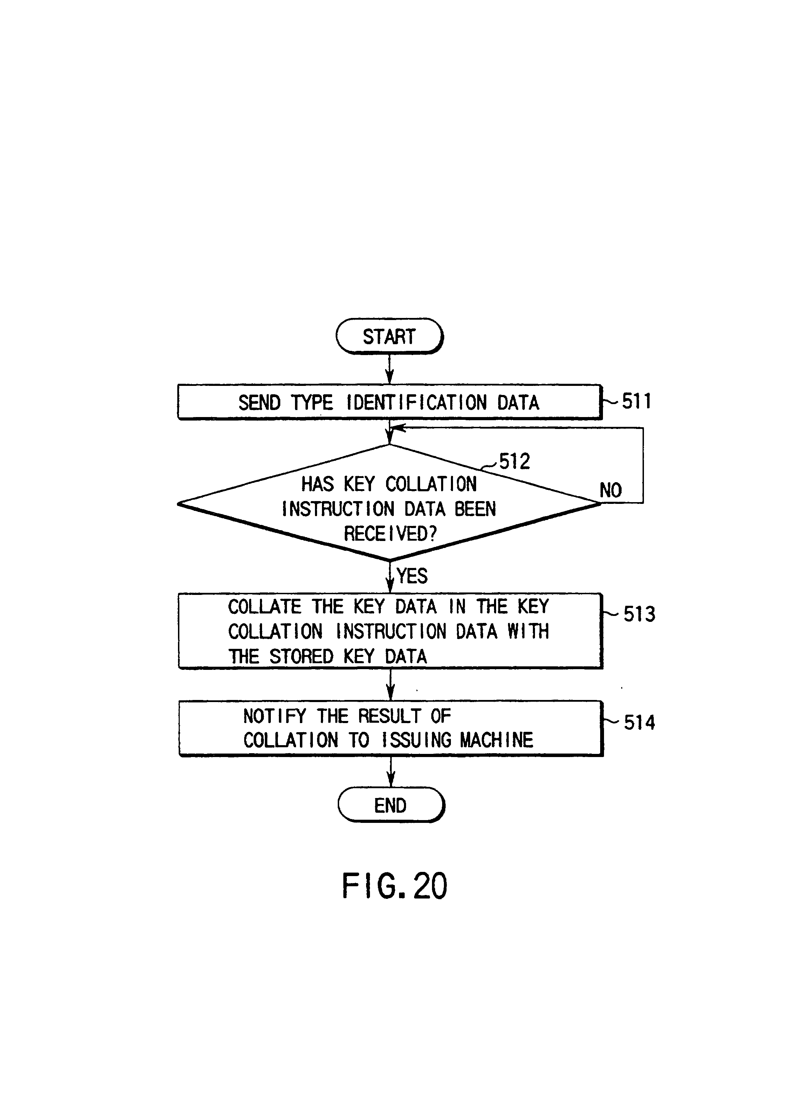

On the other hand, in the CPU of the key card 32, the process is performed according to the flowchart shown in FIG. 20. When being activated by the operating voltage from the key card reader/writer unit 31, the type identification data stored in the internal data memory is sent to the key card reader/writer unit 31 (step 511).

Thereafter, when the key collate instruction data from the key card reader/writer unit 31 has been received (YES at step 512), the key data in the key collate instruction data is collated with the key data stored in the internal data memory (step 513). Then, the result of the collation is sent to the key card reader/writer unit 31 (step 514).

With the first modification, too, it is judged whether or not the card inserted by the operator is valid. Only when the result of the judgment has shown that the card is valid, the issuing process with the issuing machine 21 is allowed. As a result, an unauthorized person is prevented from performing the issuing process illegally, which assures high security and reliability.

Next, a second modification of the third embodiment will be explained. In the second modification, instead of the aforementioned judging means (6), judging means explained in item (6b) below is used as functional means the control unit 26 of the issuing machine 21 has:
(6b) Judging means which takes in the type identification data from the card (the key card 32 or another card) inserted in the key card reader/writer unit 31 when the operating power supply voltage is turned on by the on operation of the power switch 33 (when the apparatus is started) and judges the type of the card. When the judged type is that of the key card 32 corresponding to the IC card issuing apparatus, random number request instruction data is sent to the key card 32. Then, in the key card 32, specific random number data is generated and enciphered. The random number data generated in the key card 32 is taken in by the control unit 26 and enciphered through the same procedure as that in the key card 32. The enciphered data is sent to the key card 32. Then, the key card 32 collates the enciphered data generated by itself with the enciphered data supplied from the control unit 26. Then, the result of the collation is taken in by the control unit 26. When the result has shown that they coincide, the judging means judges that the key card 32 is valid.

Furthermore, in the second modification, instead of the aforementioned control means (1), control means explained in item (1b) below is used as functional means the CPU of the key card 32 has:
(1b) Control means which sends the type identification data in the internal data memory to the key card reader/writer unit 31 when being activated by the operating voltage from the key card reader/writer unit 31, thereafter reads the random number data from the internal data memory, enciphers the data when receiving the random number request instruction data from the key card reader/writer unit 31, collates the enciphered data with the enciphered data sent from the key card reader/writer unit 31, and sends the result of the collation to the key card reader/writer unit 31.

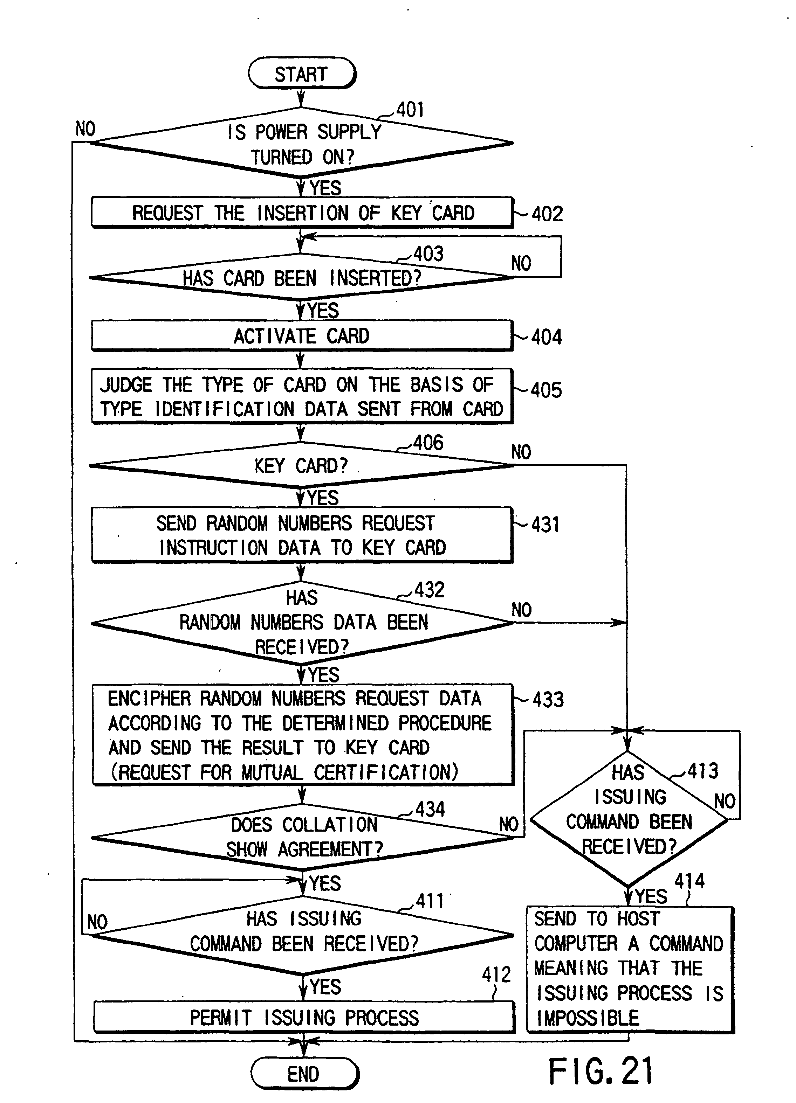

The operation of the second modification having the above configuration will be explained. FIG. 21 is a flowchart to help explain the operation of the control unit 26 of the issuing machine 21. As shown in FIG. 21, the processes at step 431 and step 434 are executed in place of the processes at step 407 to step 410 in FIG. 17.

If the card inserted in the key card reader/writer unit 31 is the key card 32 corresponding to the IC card issuing apparatus, not an employee identification card or a pass (YES at step 406), the random number request instruction data will be sent to the key card 32 (step 431).

When the random number data generated at the key card 32 on the basis of the random number instruction data is taken in (YES at step 432), the random number data is enciphered according to a specific procedure. The enciphered data is sent to the key card 32 (step 433). The sending of the enciphered data makes a request to the key card 32 for mutual certification.

Mutual certification is a method of mutually confirming whether the other party is valid by allowing the issuing machine 21 and key card 32 to achieve processing according to predetermined procedures and by judging whether the values after the processing become equal.

Thereafter, the two enciphered data items are collated at the key card 32. If the result of the collation has shown coincidence (YES at step 434), it will be judged that the key card 32 is valid (the operator has the authority to perform the issuing process). From this judgment, the issuing process with the issuing machine 21 will be permitted (step 412) on reception of the issuing command from the host computer 11 (YES at step 411).

If the result has shown disagreement (NO at step 434), it will be judged that the key card 32 is invalid (the operator has no authority to perform the issuing process). From this judgment, an issue impossible command indicating that the issuing process is impossible will be sent to the host computer 11 (step 414) on reception of the issuing command from the host computer 11 (YES at step 413).

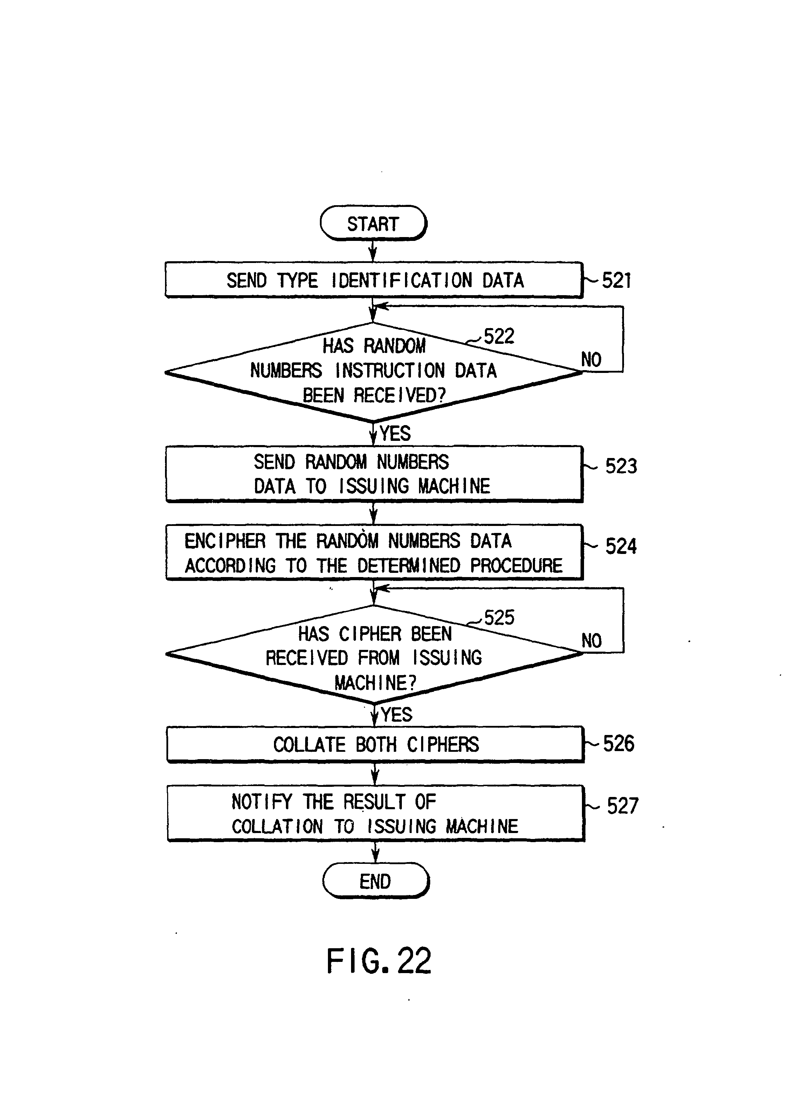

On the other hand, in the CPU of the key card 32, the process is performed according to the flowchart shown in FIG. 22. When being activated by the operating voltage from the key card reader/writer unit 31, the CPU causes the type identification data in the internal data memory to be sent to the key card reader/writer unit 31 (step 521).

Thereafter, when the random number request instruction data from the key card reader/writer unit 31 has been received (YES at step 522), the random number data in the internal data memory is sent to the key card reader/writer unit 31 (step 523) and is enciphered according to a specific procedure (step 524).

When the enciphered data has been received from the key card reader/writer unit 31 (YES at step 525), the enciphered data is collated with the enciphered data created in the key card 32 (step 526). Then, the result of the collation is sent to the key card reader/writer unit 31 (step 527).

With the second modification, too, it is judged by mutual certification between the issuing machine 21 and key card 32 whether or not the card inserted by the operator is valid. Only when the result of the judgment has shown that the card is valid, the issuing process with the issuing machine 21 is allowed. As a result, an unauthorized person is prevented from performing the issuing process illegally, which assures high security and reliability.

## Claims

1. An IC card issuing system comprising:
a control section (11) which includes means for creating IC card instruction data items necessary to write issue data into an IC card (28) and means for sending the IC card instruction data items collectively; and
an issuing section (21) connected to said control section (11) via a signal line and including means for holding the IC card instruction data items sent collectively from said control section and means for sequentially inputting the held IC card instruction data items to said IC card (28) while verifying the response from said IC card (28).

2. The IC card issuing system according to claim 1, wherein said control section (11) includes means for creating magnetic encode data and print data for said IC card (28), and means for sending these data items collectively to said issuing section (21), and
said issuing section (21) includes means for recording said magnetic encode data held in said holding means into said IC card (28), and means for printing on said IC card (28) on the basis of said print data held in said holding means.

3. The IC card issuing system according to claim 1 or 2, wherein said control means (11) includes means for creating response data said IC card (28) is to return when the IC card instruction data items are sequentially inputted to said IC card (28), and means for sending these data items collectively to said issuing section (21), and
said issuing section (21) includes means for holding the individual data items sent collectively from said control section and means for sequentially inputting the IC card instruction data items held in the holding means to said IC card (28) while collating the response data returned from said IC card (28) with the response data held in said holding means.

4. An IC card issuing system according to claim 1, wherein
said means for creating IC card instruction data items in said control section (11) selectively creates and sends externally specified one of the IC card instruction data necessary to write issue data into an IC card (28), magnetic encode data for said IC card (28), and print data for said IC card (28); and
said issuing section (21) includes means for inputting the IC card instruction data sent from the control section into said IC card (28), means for recording the magnetic encode data sent from said control section (11) into said IC card (28), and means for printing on said IC card (28) on the basis of the print data sent from said control section (11).

5. The IC card issuing system according to claim 4, wherein said control section (11) includes means for, by request for continuous issuing, creating data not created by a selective data creating process.

6. The IC card issuing system according to claim 4, wherein said control section (11) includes storage means for storing the contents of the selective data creating process as issue history and means for creating uncreated data on the basis of the issue history stored in said storage means according to the continuous issuing request.

7. An IC card issuing system according to any one of claim 1 to 6, wherein
said issuing section (21) includes judging means for judging whether or not the medium (32) the operator has at the start-up of the IC card issuing apparatus is valid, and control means for permitting said issuing process when the judging means has judged that the medium is valid.

8. The IC card issuing system according to claim 7, wherein said judging means includes means for taking in medium certification data stored in said medium (32), collating this with medium certification data previously stored in said issuing section (21), and judging that said medium (32) is valid when the result of the collation has shown coincidence.

9. The IC card issuing system according to claim 7, wherein said judging means includes means for taking in type identification data stored in said medium (32) and judging the type of the medium (32) and means for taking in medium certification data stored in said medium (32) when the judging means has judged that said medium (32) is an identification medium corresponding to the IC card issuing apparatus, collating the medium certification data with medium certification data previously stored in said issuing section (21), and judging that said medium (32) is valid when the result of the collation has shown coincidence.

10. The IC card issuing system according to claim 7, wherein said judging means includes means for sending key collate instruction data to said medium (32) and causing said medium (32) to collate the key data in said key collate instruction data with the key data previously stored in said medium (32), and judging means for taking in the result of the collation from said medium (32) and judging that said medium (32) is valid when the result has shown coincidence.

11. The IC card issuing system according to claim 7, wherein said judging means includes means for taking in type identification data stored in said medium (32) and judging the type of the medium (32), means for sending key collate instruction data to said medium (32) when the judging means has judged that said medium (32) is an identification medium corresponding to the IC card issuing apparatus and causing said medium (32) to collate the key data in said key collate instruction data with the key data previously stored in said medium (32), and means for taking in the result of the collation from said medium (32) and judging that said medium (32) is valid when the result has shown coincidence.

12. The IC card issuing system according to claim 7, wherein said judging means includes means for sending random number request instruction data to said medium (32) and causing said medium (32) to generate random number data and encipher the random number data, means for taking in the generated random number data, enciphering the data, and sending the enciphered data to said medium (32), means for causing said medium (32) to collate the enciphered data sent to said medium (32) with the enciphered data generated in said medium (32), and judging means for taking in the result of the collation from said medium (32) and judging that said medium (32) is valid when the result has shown coincidence.

13. The IC card issuing system according to claim 7, wherein said judging means includes means for taking in type identification data stored in said medium (32) and judging the type of the medium (32), means for sending random number request instruction data to said medium (32) when the judging means has judged that said medium (32) is an identification medium corresponding to the IC card issuing apparatus and causing said medium (32) to generate random number data and encipher the random number data, means for taking in the generated random number data, enciphering the data, and sending the enciphered data to said medium (32), means for causing said medium (32) to collate the enciphered data sent to said medium (32) with the enciphered data generated in said medium (32), and means for taking in the result of the collation from said medium (32) and judging that said medium (32) is valid when the result has shown coincidence.

14. An IC card issuing method comprising:
a first step which includes the step of creating IC card instruction data items necessary to write issue data into an IC card (28) and the step of sending the IC card instruction data items collectively; and
a second step which includes the step of holding the IC card instruction data items sent collectively in the first step and the step of sequentially inputting the held IC card instruction data items to said IC card (28) while verifying the response from said IC card (28).

15. The IC card issuing method according to claim 14, wherein said first step includes the step of creating magnetic encode data and print data for said IC card (28), and the step of sending these data items collectively, and
said second step includes the step of recording said magnetic encode data held in said holding step into said IC card, and the step of printing on said IC card (28) on the basis of said print data held in said holding step.

16. The IC card issuing method according to claim 14 or 15, wherein
said first step includes the step of creating response data said IC card (28) is to return when the IC card instruction data items are sequentially inputted to said IC card (28), and the step of sending these data items collectively, and
said second step includes the step of holding the data items sent collectively in said first step and the step of sequentially inputting the IC card instruction data items held in said holding step to said IC card (28) while collating the response data returned from said IC card (28) with the response data held in said holding step.

17. The IC card issuing method according to claim 16, wherein
said first step which includes the step of selectively creating the externally specified one of IC card instruction data necessary to write issue data into said IC card (28), magnetic encode data for said IC card (28), and print data for said IC card (28), and
said second step which includes the step of inputting the IC card instruction data created in said first step to said IC card (28), the step of recording the magnetic encode data created in said first step into said IC card (28), and the step of printing on said IC card (28) on the basis of the print data created in said first step.

18. The IC card issuing method according to claim 16, wherein said first step includes the step of, by request for continuous issuing, creating data not created by a selective data creating process.

19. The IC card issuing method according to claim 16, wherein said first step includes the step of storing the contents of the selective data creating process as issue history and the step of creating uncreated data on the basis of the issue history stored in said storing step according to the continuous issuing request.

## Patentansprüche

1. IC-Kartenausgabesystem mit:
einem Steuerabschnitt (11), der ein Mittel zum Erzeugen von IC-Kartenanweisungsdatenstücken, die zum Schreiben von Ausgabedaten in eine IC-Karte (28) erforderlich sind, und ein Mittel zum kollektiven Senden der IC-Kartenanweisungsdatenstücke aufweist; und
einem Ausgabeabschnitt (21), der mit dem Steuerabschnitt (11) über eine Signalleitung verbunden ist, und der ein Mittel zum Halten der IC-Kartenanweisungsdatenstücke, die kollektiv von dem Steuerabschnitt gesendet worden sind, und ein Mittel zum sequentiellen Eingeben der gehaltenen IC-Kartenanweisungsdatenstücke in die IC-Karte (28) aufweist, während die Antwort von der IC-Karte (28) verifiziert wird.

2. IC-Kartenausgabesystem nach Anspruch 1, bei dem der Steuerabschnitt (11) ein Mittel aufweist zum Erzeugen von Magnetcodedaten und Druckdaten für die IC-Karte (28), und ein Mittel zum kollektiven Senden dieser Datenstücke an den Ausgabeabschnitt (21), und
der Ausgabeabschnitt (21) ein Mittel aufweist zum Aufzeichnen der Magnetcodedaten, die in dem Haltemittel gehalten sind, in der IC-Karte (28), und ein Mittel zum Drucken auf die IC-Karte (28) basierend auf den in dem Haltemittel gehaltenen Druckdaten.

3. IC-Kartenausgabesystem nach Anspruch 1 oder 2, bei dem das Steuermittel (11) ein Mittel aufweist zum Erzeugen von Antwortdaten, die die IC-Karte (28) zurück gibt, wenn die IC-Kartenanweisungsdatenstücke sequentiell in die IC-Karte (28) eingegeben werden, und ein Mittel zum kollektiven Senden dieser Datenstücke an den Ausgabeabschnitt (21), und
der Ausgabeabschnitt (21) ein Mittel aufweist zum Halten der individuellen Datenstücke, die kollektiv von dem Steuerabschnitt gesendet worden sind, und ein Mittel zum sequentiellen Eingeben der IC-Kartenanweisungsdatenstücke, die in dem Haltemittel gehalten sind, in die IC-Karte (28), während die Antwortdaten, die von der IC-Karte (28) zurückgegeben worden sind, mit dem in dem Haltemittel gehaltenen Antwortdaten verglichen werden.

4. IC-Kartenausgabesystem nach Anspruch 1, bei dem das Mittel zum Erzeugen der IC-Kartenanweisungsdatenstücke in dem Steuerabschnitt (11) extern spezifizierte IC-Kartenanweisungsdaten, die notwendig sind zum Schreiben von Ausgabedaten in eine IC-Karte (28), Magnetcodedaten für die IC-Karte (28) und Druckdaten für die IC-Karte (28) selektiv erzeugt und sendet; und
der Ausgabeabschnitt (21) ein Mittel zum Eingeben der IC-Kartenanweisungsdaten, die von dem Steuerabschnitt gesendet worden sind, in die IC-Karte (28), ein Mittel zum Aufzeichnen der Magnetcodedaten, die von dem Steuerabschnitt (11) gesendet worden sind, in der IC-Karte (28), und ein Mittel zum Drucken auf die IC-Karte (28) auf der Basis der von dem Steuerabschnitt (11) gesendeten Druckdaten, aufweist.

5. IC-Kartenausgabesystem nach Anspruch 4, bei dem der Steuerabschnitt (11) ein Mittel aufweist, um auf Anfrage für ein kontinuierliches Ausgeben Daten zu erzeugen, die durch einen selektiven Datenerzeugungsprozess nicht erzeugt werden.

6. IC-Kartenausgabesystem nach Anspruch 4, bei dem der Steuerabschnitt (11) ein Speichermittel aufweist zum Speichern der Inhalte des selektiven Datenerzeugungsprozesses als Ausgabehistorie, und ein Mittel zum Erzeugen nicht erzeugter Daten auf der Basis der Ausgabehistorie, die in dem Speichermittel gespeichert ist, gemäß der kontinuierlichen Ausgabeanfrage.

7. IC-Kartenausgabesystem nach irgendeinem der Ansprüche 1 bis 6, bei dem der Ausgabeabschnitt (21) ein Beurteilungsmittel zum Beurteilen, ob das Medium (32), das der Operator bei Inbetriebnahme der IC-Kartenausgabevorrichtung verwenden möchte, gültig ist, und ein Steuermittel aufweist zum Erlauben des Ausgabeprozesses, wenn das Beurteilungsmittel das Medium als gültig beurteilt.

8. IC-Kartenausgabesystem nach Anspruch 7, bei dem das Beurteilungsmittel ein Mittel aufweist zum Übernehmen von Mediumzertifizierungsdaten, die in dem Medium (32) gespeichert sind, zum Vergleichen dieser mit Mediumzertifizierungsdaten, die zuvor in dem Ausgabeabschnitt (21) gespeichert wurden, und zum Beurteilen, dass das Medium (32) gültig ist, wenn das Ergebnis des Vergleichs eine Übereinstimmung zeigt.

9. IC-Kartenausgabesystem nach Anspruch 7, bei dem das Beurteilungsmittel ein Mittel zum Übernehmen von Typidentifikationsdaten, die in dem Medium (32) gespeichert sind, und zum Beurteilen des Typs des Mediums (32), und ein Mittel aufweist zum Übernehmen von Mediumzertifizierungsdaten, die in dem Medium (32) gespeichert sind, wenn das Beurteilungsmittel beurteilt, dass das Medium (32) ein Identifikationsmedium ist, das der IC-Kartenausgabevorrichtung entspricht, zum Vergleichen der Mediumzertifizierungsdaten mit Mediumzertifizierungsdaten, die zuvor in dem Ausgabeabschnitt (21) gespeichert wurden, und zum Beurteilen, dass das Medium (32) gültig ist, wenn das Ergebnis des Vergleichs eine Übereinstimmung zeigt.

10. IC-Kartenausgabesystem nach Anspruch 7, bei dem das Beurteilungsmittel ein Mittel aufweist zum Senden von Schlüsselvergleichsanweisungsdaten an das Medium (32) und zum Veranlassen des Mediums (32), die Schlüsseldaten in den Schlüsselvergleichsanweisungsdaten mit den Schlüsseldaten zu vergleichen, die zuvor in dem Medium (32) gespeichert wurden, und ein Beurteilungsmittel zum Übernehmen des Ergebnisses des Vergleichs von dem Medium (32) und zum Beurteilen, dass das Medium (32) gültig ist, wenn das Ergebnis eine Übereinstimmung zeigt.

11. IC-Kartenausgabesystem nach Anspruch 7, bei dem das Beurteilungsmittel ein Mittel aufweist zum Übernehmen von Typidentifikationsdaten, die in dem Medium (32) gespeichert sind, und zum Beurteilen des Typs des Mediums (32), ein Mittel zum Senden von Schlüsselvergleichsanweisungsdaten an das Medium (32), wenn das Beurteilungsmittel beurteilt, dass das Medium (32) ein Identifikationsmedium ist, welches der IC-Kartenausgabevorrichtung entspricht, und zum Veranlassen des Mediums (32), die Schlüsseldaten in den Schlüsselvergleichsanweisungsdaten mit den Schlüsseldaten zu vergleichen, die zuvor in dem Medium (32) gespeichert wurden, und ein Mittel zum Übernehmen des Ergebnisses des Vergleichs von dem Medium (32) und zum Beurteilen, dass das Medium (32) gültig ist, wenn das Ergebnis eine Übereinstimmung zeigt.

12. IC-Kartenausgabesystem nach Anspruch 7, bei dem das Beurteilungsmittel ein Mittel aufweist zum Senden von Zufallszahlanfrageanweisungsdaten an das Medium (32) und zum Veranlassen des Mediums (32), Zufallszahldaten und eine Verschlüsselung der Zufallsdaten zu erzeugen, ein Mittel zum Übernehmen der erzeugten Zufallszahldaten, zum Verschlüsseln der Daten und zum Senden der verschlüsselten Daten an das Medium (32), ein Mittel zum Veranlassen des Mediums (32), die verschlüsselten Daten, die an das Medium (32) gesendet worden sind, mit den in dem Medium (32) erzeugten verschlüsselten Daten zu vergleichen, und ein Beurteilungsmittel zum Übernehmen des Ergebnisses des Vergleichs von dem Medium (32) und zum Beurteilen, dass das Medium (32) gültig ist, wenn das Ergebnis eine Übereinstimmung zeigt.

13. IC-Kartenausgabesystem nach Anspruch 7, bei dem das Beurteilungsmittel ein Mittel aufweist zum Übernehmen von Typidentifikationsdaten, die in dem Medium (32) gespeichert sind, und zum Beurteilen des Typs des Mediums (32), ein Mittel zum Senden von Zufallszahlanfrageanweisungsdaten an das Medium (32), wenn das Beurteilungsmittel beurteilt, dass das Medium ein Identifikationsmedium ist, das der IC-Kartenausgabevorrichtung entspricht, und zum Veranlassen des Mediums (32), Zufallszahldaten zu erzeugen und die Zufallszahldaten zu verschlüsseln, ein Mittel zum Übernehmen der erzeugten Zufallszahldaten, Verschlüsseln der Daten und Senden der verschlüsselten Daten an das Medium (32), ein Mittel zum Veranlassen des Mediums (32), die verschlüsselten Daten, die an das Medium (32) gesendet worden sind, mit den in dem Medium (32) verschlüsselten Daten zu vergleichen, und ein Mittel zum Übernehmen des Ergebnisses des Vergleichs von dem Medium (32) und zum Beurteilen, dass das Medium (32) gültig ist, wenn das Ergebnis eine Übereinstimmung zeigt.

14. IC-Kartenausgabesystem mit
einem ersten Schritt, der den Schritt des Erzeugens von IC-Kartenanweisungsdatenstücken aufweist, die notwendig sind, um Ausgabedaten in eine IC-Karte (28) zu schreiben, und den Schritt des kollektiven Sendens der IC-Kartenanweisungsdatenstücke; und
einem zweiten Schritt, der den Schritt des Haltens der IC-Kartenanweisungsdatenstücke aufweist, die kollektiv im ersten Schritt gesendet worden sind, und den Schritt des sequentiellen Eingebens der gehaltenen IC-Kartenanweisungsdatenstücke in die IC-Karte (28), während die Antwort von der IC-Karte (28) verifiziert wird.

15. IC-Kartenausgabeverfahren nach Anspruch 14, bei dem
der erste Schritt den Schritt des Erzeugens von Magnetcodedaten und Druckdaten für die IC-Karte (28) aufweist, und den Schritt des kollektiven Sendens dieser Daten, und
der zweite Schritt den Schritt des Aufzeichnens der Magnetcodedaten, die in dem Halteschritt gehalten werden, in die IC-Karte aufweist, und den Schritt des Druckens auf die IC-Karte (28) auf der Basis der in dem Halteschritt gehaltenen Druckdaten.

16. IC-Kartenausgabeverfahren nach Anspruch 14 oder 15, bei dem
der erste Schritt den Schritt des Erzeugens von Antwortdaten aufweist, die die IC-Karte (28) zurückgibt, wenn die IC-Kartenanweisungsdatenstücke sequentiell in die IC-Karte (28) eingegeben werden, und den Schritt des kollektiven Sendens dieser Datenstücke, und
der zweite Schritt den Schritt des Haltens der Datenstücke aufweist, die kollektiv in dem ersten Schritt gesendet worden sind, und den Schritt des sequentiellen Eingebens der IC-Kartenanweisungsdatenstücke, die in dem Halteschritt gehalten werden, in die IC-Karte (28), während die Antwortdaten, die von der IC-Karte (28) zurückgegeben werden, mit den Antwortdaten, die in dem Halteschritt gehalten werden, verglichen werden.

17. IC-Kartenausgabeverfahren nach Anspruch 16, bei dem
der ersten Schritt, der den Schritt des selektiven Erzeugens der extern spezifizierten IC-Kartenanweisungsdaten, die notwendig sind, um Ausgabedaten in die IC-Karte (28) zu schreiben, der Magnetcodedaten für die IC-Karte (28) und der Druckdaten für die IC-Karte (28) aufweist, und
der zweite Schritt, der den Schritt des Eingebens der IC-Kartenanweisungsdaten, die in dem ersten Schritt erzeugt worden sind, in die IC-Karte (28), den Schritt des Aufzeichnens der Magnetcodedaten, die in dem ersten Schritt erzeugt worden sind, in der IC-Karte (28), und den Schritt des Druckens auf die IC-Karte (28) aufweist, basierend auf den in dem ersten Schritt erzeugten Druckdaten.

18. IC-Kartenausgabeverfahren nach Anspruch 16, bei dem der erste Schritt den Schritt des Erzeugens von Daten aufweist, die nicht durch einen selektiven Datenerzeugungsprozess erzeugt werden, auf Anfrage für ein kontinuierliches Ausgeben.

19. IC-Kartenausgabeverfahren nach Anspruch 16, bei dem der erste Schritt den Schritt des Speichems der Inhalte des selektiven Datenerzeugungsprozesses als Ausgabehistorie und den Schritt des Erzeugens nicht erzeugter Daten auf der Basis der Ausgabehistorie, die in dem Speicherschritt gemäß der kontinuierlichen Ausgabeanfrage gespeichert sind, aufweist.

## Revendications

1. Système d'émission de cartes à puces comprenant :
une section de contrôle (11) qui comprend un moyen pour créer des données d'instructions de cartes à puces nécessaires pour écrire des données d'émission sur une carte à puce (28) et un moyen pour envoyer collectivement des données d'instructions de cartes à puces ; et
une section d'émission (21) connectée à ladite section de contrôle (11) via une ligne de signal et comprenant un moyen pour contenir les données d'instructions de cartes à puces envoyées collectivement de ladite section de contrôle et un moyen pour entrer les données d'instructions de cartes à puces contenues sur ladite carte à puce (28) tout en vérifiant la réponse de ladite carte à puce (28) .

2. Système d'émission de cartes à puces selon la revendication 1, dans lequel ladite section de contrôle (11) comprend un moyen pour créer des données de code magnétique et des données d'impression pour ladite carte à puce (28), et un moyen pour envoyer ces données collectivement vers ladite section d'émission (21), et
ladite section d'émission (21) comprend un moyen pour enregistrer lesdites données de code magnétique contenues dans ledit moyen de maintien.

3. Système d'émission de cartes à puces selon la revendication 1 ou 2, dans lequel ledit moyen de contrôle (11) comprend un moyen pour créer des données de réponse que ladite carte à puce (28) doit retourner lorsque les données d'instructions de cartes à puces sont séquentiellement entrées sur ladite carte à puce (28), et un moyen pour envoyer collectivement ces données vers ladite section d'émission (21), et
ladite section d'émission (21) comprend un moyen pour contenir les données individuelles envoyées collectivement de ladite section de contrôle et un moyen pour entrer sélectivement les données d'instructions de cartes à puces contenues dans le moyen de maintien sur ladite carte à puce (28) tout en rapprochant les données de réponse retournées par ladite carte à puce (28) des données de réponse contenues dans ledit moyen de maintien.

4. Système d'émission de cartes à puces selon la revendication 1, dans lequel
ledit moyen pour créer des données d'instructions de cartes à puces dans ladite section de contrôle (11) crée sélectivement et envoie une donnée spécifiée en externe des données d'instructions de cartes à puces nécessaires pour écrire des données d'émission sur une carte à puce (28), des données magnétiques pour ladite carte à puce (28), et des données d'impression pour ladite carte à puce (28) ; et
ladite section d'émission (21) comprend un moyen pour entrer les données d'instructions de cartes à puces envoyées de la section de contrôle à ladite carte à puce (28), un moyen pour enregistrer les données de code magnétique envoyées de ladite section de contrôle (11) à ladite carte à puce (28), et un moyen pour imprimer les données d'impression envoyées de ladite section de contrôle (11) sur ladite carte à puce (28).

5. Système d'émission de cartes à puces selon la revendication 4, dans lequel ladite section de contrôle (11) comprend un moyen pour, sur demande d'émission continue, créer des données qui n'ont pas été créées par un processus de création de données sélectif.

6. Système d'émission de cartes à puces selon la revendication 4, dans lequel ladite section de contrôle (11) comprend un moyen de stockage pour stocker le contenu du processus de création de données sélectif sous forme d'historique d'émission et un moyen pour créer des données qui n'ont pas été créées en fonction d'un historique d'émission stocké dans ledit moyen de stockage d'après la demande d'émission continue.

7. Système d'émission de cartes à puces selon l'une quelconque des revendications 1 à 6, dans lequel
ladite section d'émission (21) comprend un moyen de jugement pour juger de la validité du support (32) que l'opérateur a au démarrage de l'appareil d'émission de cartes à puces, et un moyen de contrôle pour permettre ledit processus d'émission lorsque le moyen de jugement a jugé que le support est valide.

8. Système d'émission de cartes à puces selon la revendication 7, dans lequel ledit moyen de jugement comprend un moyen pour prendre des données de certification de support stockées dans ledit support (32), pour les rapprocher des données de certification de support précédemment stockées dans ladite section d'émission (21) et pour juger si ledit support (32) est valide lorsque le résultat du rapprochement révèle une coïncidence.

9. Système d'émission de cartes à puces selon la revendication 7, dans lequel ledit moyen de jugement comprend un moyen pour prendre des données d'identification de type stockées dans ledit support (32) et pour juger le type de support (32), et un moyen pour prendre des données de certification de support stockées dans ledit support (32) lorsque le moyen de jugement a jugé que ledit support (32) est un support d'identification correspondant à l'appareil d'émission de cartes à puces, *1* pour rapprocher les données de certification de support des données de certification de support précédemment stockées dans ladite section d'émission (21), et pour juger que ledit support (32) est valide lorsque le résultat du rapprochement révèle une coïncidence.

10. Système d'émission de cartes à puces selon la revendication 7, dans lequel ledit moyen de jugement comprend un moyen pour envoyer des données d'instructions de rapprochement de clé au dit support (32) et pour forcer ledit support (32) à rapprocher les données de clé dans lesdites données d'instructions de rapprochement de clé des données de clé précédemment stockées dans ledit support (32), et un moyen de jugement pour prendre le résultat du rapprochement dudit support (32) et pour juger que ledit support (32) est valide lorsque le résultat révèle une coïncidence.

11. Système d'émission de cartes à puces selon la revendication 7, dans lequel ledit moyen de jugement comprend un moyen pour prendre les données d'identification de type stockées dans ledit support (32) et pour juger le type de support, un moyen pour envoyer les données d'instructions de rapprochement de clé au dit support (32) lorsque le moyen de jugement a jugé que ledit support (32) est un support d'identification qui correspond à l'appareil d'émission de cartes à puces et pour forcer ledit support (32) à rapprocher les données de clé dans lesdites données d'instructions de rapprochement de clé des données de clé précédemment stockées dans ledit support (32), et un moyen pour prendre le résultat du rapprochement dudit support (32) et pour juger que ledit support (32) est valide lorsque le résultat révèle une coïncidence.

12. Système d'émission de cartes à puces selon la revendication 7, dans lequel ledit moyen de jugement comprend un moyen pour envoyer des données d'instruction de demande de nombre aléatoire au dit support (32) et pour forcer ledit support (32) à générer des données de nombre aléatoire et à crypter les données de nombre aléatoire, un moyen pour prendre les données de nombre aléatoire générées, pour crypter les données, et pour envoyer les données cryptées au dit support (32), un moyen pour forcer ledit support (32) à rapprocher les données cryptées envoyées vers ledit support (32) des données cryptées générées dans ledit support (32), et un moyen de jugement pour prendre le résultat du rapprochement dudit support (32) et pour juger que ledit support (32) est valide lorsque le résultat révèle une coïncidence.

13. Système d'émission de cartes à puces selon la revendication 7, dans lequel ledit moyen de jugement comprend un moyen pour prendre les données d'identification de type stockées dans ledit support (32) et pour juger le type du support (32), un moyen pour envoyer des données d'instruction de demande de nombre aléatoire au dit support (32) lorsque le moyen de jugement a jugé que ledit support (32) est un support d'identification correspondant à l'appareil d'émission de cartes à puces et pour forcer ledit support (32) à générer des données de nombre aléatoire et à crypter les données de nombre aléatoire, un moyen pour prendre les données de nombre aléatoire générées, pour crypter les données, et pour envoyer les données cryptées vers ledit support (32), un moyen pour forcer ledit support (32) à rapprocher les données cryptées envoyées vers ledit support (32) des données cryptées générées dans ledit support (32), et un moyen pour prendre le résultat du rapprochement dudit support (32) et pour juger que ledit support (32) est valide lorsque le résultat révèle une coïncidence.

14. Procédé d'émission de cartes à puces comprenant :
une première étape qui comprend l'étape consistant à créer des données d'instructions de cartes à puces nécessaires pour écrire des données d'émission dans une carte à puce (28) et l'étape consistant à envoyer collectivement les données d'instructions de cartes à puces ; et
une seconde étape qui comprend l'étape consistant à contenir les données d'instructions de cartes à puces envoyées collectivement dans la première étape et l'étape consistant à entrer séquentiellement les données d'instructions de cartes à puces contenues sur ladite carte à puce (28) tout en vérifiant la réponse de ladite carte à puce (28).

15. Procédé d'émission de cartes à puces selon la revendication 14, dans lequel ladite première étape comprend l'étape de création de données de code de magnétique et de données d'impression pour ladite carte à puce (28), et l'étape consistant à envoyer collectivement ces données, et
ladite seconde étape comprend l'étape consistant à enregistrer les données de code magnétique contenues dans ladite étape de maintien sur ladite carte à puce, et l'étape consistant à imprimer sur ladite carte à puce (28) en fonction desdites données d'impression contenues dans ladite étape de maintien.

16. Procédé d'émission de cartes à puces selon la revendication 14 ou 15, dans lequel
ladite première étape comprend l'étape consistant à créer les données de réponse que ladite carte à puce (28) doit retourner lorsque les données d'instructions de cartes à puces sont entrées séquentiellement sur ladite carte à puce (28), et l'étape consistant à envoyer collectivement ces données, et
ladite seconde étape comprend l'étape consistant à contenir les données envoyées collectivement dans ladite première étape et l'étape consistant à entrer séquentiellement les données d'instructions de cartes à puces contenues dans ladite étape de maintien sur ladite carte à puce (28) tout en rapprochant les données de réponse retournées par ladite carte à puce (28) des données de réponse contenues dans ladite étape de maintien.

17. Procédé d'émission de cartes à puces selon la revendication 16, dans lequel
ladite première étape qui comprend l'étape consistant à créer sélectivement la donnée spécifiée en externe des données d'instructions de cartes à puces nécessaires pour écrire les données d'émission sur ladite carte à puce (28), les données de code magnétique pour ladite carte à puce (28), et les données d'impression pour ladite carte à puce (28), et
ladite seconde étape qui comprend l'étape consistant à entrer les données d'instructions de cartes à puces créées dans ladite première étape sur ladite carte à puce (28), l'étape consistant à enregistrer les données de code magnétique créées dans ladite première étape sur ladite carte à puce (28), et l'étape consistant à imprimer sur ladite carte à puce (28) en fonction des données d'impression créées dans ladite première étape

18. Procédé d'émission de cartes à puces selon la revendication 16, dans lequel ladite première étape comprend l'étape consistant à, sur demande d'émission continue, créer des données qui n'ont pas été créées par un processus de création de données sélectif.

19. Procédé d'émission de cartes à puces selon la revendication 16, dans lequel ladite première étape comprend l'étape consistant à stocker le contenu du processus de création de données sélectif sous forme d'historique d'émission et l'étape consistant à créer les données qui n'ont pas été créées en fonction de l'historique d'émission stocké dans ladite étape de stockage d'après la demande d'émission continue.
